(19) Europäisches Patentamt
European Patent Office
Office européen des brevets

(11) **EP 1 874 593 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **05822613.5**

(22) Anmeldetag: **15.12.2005**

(51) Int Cl.:
**B60R 22/34** *(2006.01)*          **B60R 22/46** *(2006.01)*
**F16F 7/00** *(2006.01)*

(86) Internationale Anmeldenummer:
**PCT/EP2005/013482**

(87) Internationale Veröffentlichungsnummer:
**WO 2006/108451 (19.10.2006 Gazette 2006/42)**

(54) **KRAFTBEGRENZUNGSEINHEIT FÜR EIN KRAFTFAHRZEUG**

FORCE LIMITING UNIT FOR A MOTOR VEHICLE

LIMITEUR DE FORCE DESTINE A UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.04.2005 DE 102005016822**

(43) Veröffentlichungstag der Anmeldung:
**09.01.2008 Patentblatt 2008/02**

(73) Patentinhaber: **AUTOLIV DEVELOPMENT AB**
**447 83 Vargarda (SE)**

(72) Erfinder: **JABUSCH, Ronald**
**25336 Elmshorn (DE)**

(74) Vertreter: **Müller, Karl-Ernst et al**
**Patentanwälte**
**Becker & Müller**
**Turmstrasse 22**
**40878 Ratingen (DE)**

(56) Entgegenhaltungen:
**EP-B- 1 222 097     US-A- 4 206 887**
**US-B1- 6 260 782**

**Beschreibung**

Die Erfindung betrifft eine Kraftbegrenzungseinrichtung zum Einsatz in einem Kraftfahrzeug, die zur Einstellung der Dämpfung einer in einer Gefahrensituation in dem Kraftfahrzeug zwischen zwei sich relativ zueinander bewegenden Teilen auftretenden Kraft eingerichtet ist.

Derartige Kraftbegrenzungseinrichtungen sind insbesondere in Fahrzeugsicherheitssystemen im Einsatz und ermöglichen hier die Dämpfung einer in einem Crashfall in dem Fahrzeugsicherheitssystem auftretenden Gurtauszugskraft, indem die Kraftbegrenzungseinrichtung einen begrenzten Gurtauslass gegenüber einem den Gurt haltenden Bauteil ermöglicht. Derartige Kraftbegrenzungseinrichtungen werden sowohl bei rotativ arbeitenden Fahrzeugsicherheitssystemen in Form von vorzugsweise selbstsperrenden und auch mit Straffern kombinierten Sicherheitsgurtaufrollern oder in Form von reinen Straffeinrichtungen, beispielsweise in Form von Endbeschlagstraffern, eingesetzt, aber auch bei linear arbeitenden Fahrzeugsicherheitssystemen, bei denen der Gurt an einem Beschlagteil gehalten ist, welches linear beispielsweise mittels einer Kolben-ZylinderAnordnung entweder zum Zwecke einer Straffung oder zur Einstellung eines geregelten Gurtauslasses beweglich ist.

Es ist jedoch wünschenswert, eine Kraftbegrenzungseinrichtung auch an anderen Stellen in einem Kraftfahrzeug zu integrieren, um mit einem Crash einhergehende Relativbewegungen zwischen zwei Teilen des Kraftfahrzeuges, wie beispielsweise einer Stoßstange gegenüber dem Fahrzeugrahmen, für eine Energievernichtung zu nutzen.

Eine bei einem Sicherheitsgurtaufroller als Teil eines Fahrzeugsicherheits-systems vorgesehene Kraftbegrenzungseinrichtung gemäß Oberbegriff ist beispielsweise aus der EP 1 222 097 B1 bekannt. Hierbei besteht die Kraftbegrenzungseinrichtung zunächst aus einem Torsionsstab, dessen eines Ende mit der Gurtwelle verbunden und dessen anderes Ende im Gefahrenfall mittels einer geeigneten Sperrvorrichtung gehäusefest festlegbar ist. Kommt es im Falle eines Unfalls aufgrund der auftretenden Fahrzeugbeschleunigung bzw. Fahrzeugverzögerung zu einer Vorverlagerung des angeschnallten Fahrzeuginsassen und damit zu einer entsprechend auf die Gurtwelle einwirkenden Gurtauszugskraft, so kann sich die Gurtwelle bei gleichzeitiger Verdrillung des Torsionsstabes um einen bestimmten Betrag drehen, so dass ein Gurtauslass über einen entsprechenden Drehweg der Gurtwelle erfolgt. Dadurch wird die den Insassen bei seiner Vorwärtsbewegung zurückhaltende Kraft gedämpft. Bei dem bekannten Gurtaufroller ist eine zweite Kraftbegrenzungseinrichtung in Form einer an die Gurtwelle kuppelbaren Trägheitsmasse vorgesehen, deren Wirkung der angesprochenen Wirkung des Torsionsstabes überlagert wird. In Abhängigkeit von der Geschwindigkeit, mit der die angeschnallte Person ihre Vorwärtsbewegung ausführt, damit auch in Abhängigkeit von den Insassendaten der angeschnallten Person, wird die von der Gurtwelle in Drehung versetzte Trägheitsmasse mit ihrem Beharrungsvermögen wirksam, so dass dadurch eine zusätzliche, energievernichtende und dadurch kraftbegrenzende Komponente wirksam wird.

Mit dem bekannten Sicherheitsgurtaufroller bzw. mit dessen Kraftbegrenzungseinrichtung ist der Nachteil verbunden, dass die Wirkung der Kraftbegrenzungseinrichtung jeweils von dem Insassen, insbesondere von dessen Größe, Gewicht und auch Sitzposition im Fahrzeug, wie auch von der Schwere des Unfalls, also von dem im Gefahrenfall dem Insassen vermittelten Impuls und den daraufhin auftretende Beschleunigungskräften abhängig ist. Damit ergeben sich hinsichtlich der Wirkung der Kraftbegrenzungseinrichtung unterschiedliche Kraftniveaus, die nur mit großem Aufwand auf die angeschnallten Insassen einzustellen und zu regeln sind, um eine zu starke Beanspruchung der Insassen durch das Sicherheitsgurtsystem bei einem Unfall zu vermeiden.

Der Erfindung liegt daher die Aufgabe zugrunde, eine Kraftbegrenzungseinrichtung der eingangs genannten Art so auszugestalten, dass ihr Ansprechen und ihre Wirkung unabhängig von den Rahmenbedingungen eines Unfalls eintreten. Insbesondere bei Anwendung einer derartigen Kraftbegrenzungseinrichtung auf ein einen Fahrzeuginsassen schützendes Fahrzeugsicherheitssystem soll weiterhin die Kraftbegrenzung unabhängig von den körper- bzw. sitzpositonsbezogenen Daten des Insassens wirksam sein.

Die Lösung dieser Aufgabe ergibt sich aus dem Inhalt des unabhängigen Anspruchs 1. Vorteilhafte Ausgestaltungen und Weiterbildungen der Erfindung sind in den abhängigen Patentansprüchen angegeben, welche dieser Beschreibung nachgestellt sind.

Die Erfindung sieht in ihrem Grundgedanken vor, dass die Kraftbegrenzungseinrichtung durch ein im Gefahrenfall mit einer vorgegebenen Frequenz in Schwingung versetztes Massesystem gebildet ist, welches die Bewegung wenigstens eines sich bewegenden Teils im Verhältnis zu dem anderen Teil mit einer in Abhängigkeit von seiner Schwingungsfrequenz definierten Geschwindigkeit steuert.

Somit löst sich die Erfindung zunächst von dem den bekannten Kraftbegrenzungseinrichtungen zugrunde liegenden Konzept, eine Steuerung der Kraftbegrenzungseinrichtung in Abhängigkeit von den festgestellten Rahmenbedingungen eines Unfalls, bei Kraftfahrzeugsicherheitssystemen insbesondere aber auch von der vom Insassen ausgehenden Gurtauszugskraft vorzunehmen. Die Erfindung macht sich zunächst vielmehr die Erfahrung zunutze, dass ein Unfall hinsichtlich der Auswirkungen auftretender Beschleunigungs- bzw. Verzögerungskräfte eine eingrenzbare Zeit, im Schnitt etwa 70 ms, andauert. Somit kann das Kraftbegrenzungssystem erfindungsgemäß so ausgelegt werden, dass es während dieser Zeitdauer arbeitet und entsprechend eine maximale Relativbewegung der entsprechenden Teile zueinander definiert ist. Über die Auslegung der Kraftbegrenzungseinrichtung sind einzelne Geschwindigkeiten der Relativbewegung, beispielsweise für unterschiedliche Fahrzeugkonfigurationen, festlegbar. Da die mögliche Relativbewegung der Teile zueinander durch die eingestellte Geschwindigkeit ihrer Bewegung und die Zeitdauer der Funktion der Kraftbegrenzungseinrichtung definiert ist, vollzieht sich die Relativbewegung unabhängig von der Größe der einwirkenden Beschleunigungen beziehungsweise Kräfte und ist allein durch den nach Ausführungsbeispielen der Erfindung konstruktiv einstellbaren oder den bei einem Unfall tatsächlich auftretenden Zeitraum von ent-sprechend einwirkenden Beschleunigungs- bzw. Verzögerungskräften bestimmt. Mit anderen Worten läuft die der Kraftbegrenzung dienende Relativbewegung von Teilen des Kraftfahrzeuges entsprechend der vorgegebenen Konstruktion der Kraftbegrenzungseinrichtung ab, unabhängig davon, wie die durch die Unfallschwere jeweils bedingte Beschleunigung bzw. Verzögerung des Fahrzeuges beschaffen ist.

Soweit eine Kraftbegrenzungseinrichtung bei einem einen Fahrzeuginsassen schützenden und eine sich gegenüber einem mit einem Fahrzeug fest verbundenen Rahmen drehende Gurtspule aufweisenden Fahrzeugsicherheitssystem Anwendung findet, tritt in einem Unfall eine zeitversetzte Verzögerung von Fahrzeug und Insassen auf, die durch die vorhandene Elastizitäten beispielsweise im Sicherheitsgurtsystem und in den Sitzstrukturen bedingt und daher unvermeidlich beziehungsweise nicht beeinflussbar ist. Diese zeitversetzte Verzögerung hat eine Geschwindigkeitsdifferenz zwischen der Bewegung des Fahrzeuges und der Bewegung des Insassen zur Folge, die durch entsprechende Versuche fahrzeugspezifisch ermittelbar ist. Bei Anwendung des Erfindungsgedankens erfolgt die Voreinstellung einer konstanten Auszugsgeschwindigkeit des Gurtbandes von der Gurtspule, so dass hierdurch die Geschwindigkeitsdifferenz zwischen dem Fahrzeug und dem Insassen konstant einzustellen ist mit der Folge, dass eine zusätzliche Beschleunigung aus einer sich während des Gurtbandauszuges einstellenden zusätzlichen Geschwindigkeitsdifferenz sich nicht einstellen kann und die absolute Verzögerung des Insassen der absoluten Verzögerung des Fahrzeuges entspricht. Somit kann die Kraftbegrenzungseinheit genau entsprechend ausgelegt werden, so dass der Insasse während eines Crashablaufes jeweils den vorgegebenen, in einem Fahrzeug zur Verfügung stehenden Vorverlagerungsweg durchläuft, und zwar unabhängig von sonstigen äußeren Parametern. Mit der voreingestellten Auszugsgeschwindigkeit ist auch die Auftreffgeschwindigkeit des Insassen beispielsweise auf einen Airbag ungefähr bekannt, so dass damit beispielsweise dass Aufblasverhalten des Airbags einstellbar ist. Soweit das Fahrzeugsicherheitssystem eine einschiebbare Lenksäule umfasst, kann auch das Eintauchen der Lenksäule entsprechend der Auftreffgeschwindigkeit des Fahrzeuginsassen eingestellt werden, so dass sich insgesamt eine geringst mögliche Belastung des Fahrzeuginsassen ergibt.

In einer derartigen Anwendung wird demnach im Crashfall ein begrenzter Auslass des einen angeschnallten Fahrzeuginsassen haltenden Gurtes zur Einstellung einer Dämpfung der Gurtauszugskraft mit der durch die Frequenz des in Schwingung versetzten Massesystems definierten Auslassgeschwindigkeit gesteuert.

Hierzu ist in einer ersten Ausführungsform der Erfindung vorgesehen, dass die Anregung des Massesystems zur Erreichung seiner Schwingungsfrequenz durch den im Gefahrenfall eintretenden Gurtbandauszug erfolgt und der Gurtauslass in Abhängigkeit von der Zeitdauer der einwirkenden Gurtauszugskraft bestimmt ist, wobei vorgesehen sein kann, dass der Gurtbandauszug durch mechanisch zusammenwirkende Bauteile in die Schwingungsanregung des Massesystems umsetzbar ist. Das Grundprinzip dieses Ausführungsbeispiels beruht also darauf, dass der zu Beginn des Unfalles einsetzende Gurtbandauszug über die damit verbundene Drehung der Gurtwelle in Gurtauszugsrichtung das Massesystem in Schwingung versetzt.

Alternativ kann für alle denkbaren Einsatzfälle der erfindungsgemäßen Kraftbegrenzungseinrichtung vorgesehen sein, dass die Anregung des Massesystems zur Erreichung seiner Schwingungsfrequenz durch einen im Gefahrenfall auslösbaren und über eine vorgegebene Zeitdauer wirksamen Fremdantrieb erfolgt, wie dies beispielsweise bei einem Uhrwerk gegeben ist. Hierzu kann nach einem Ausführungsbeispiel der Erfindung vorgesehen sein, dass der Fremdantrieb als vorgespanntes Federmassesystem ausgebildet ist. In diesem Fall ist dafür Sorge zu tragen, dass die Verzahnungen des angetriebenen Massesystems mit dem angetriebenen, beweglichen Teil so ausgebildet ist, dass ein dauerhafter Eingriff der jeweiligen Verzahnungen gewährleistet ist.

Soweit die Schwingungsfrequenz über die konstruktive Auslegung des Massesystems beeinflussbar ist, kann nach Ausführungsbeispielen der Erfindung vorgesehen sein, dass eine über den Zeitabschnitt der Funktion des Massesystems konstante Schwingungsfrequenz des Massesystems eingestellt ist. Es ist aber auch vorgesehen, eine degressive oder auch progressive Schwingungsfrequenz des Massesystems einzustellen, so dass damit eine während des Unfallgeschehens eintretende Änderung des Maßes der Kraftbegrenzung vorgebbar ist.

Es kann vorgesehen sein, dass eine am Ende des Zeitabschnitts wirksam werdende, eine Ruhigstellung des Massesystems bewirkende Schwingungsabschaltung vorgesehen ist, um das gewünschte Maß des Gurtbandauszuges festzulegen beziehungsweise zu begrenzen.

Im einzelnen kann in einer Anwendung des vorstehenden, allgemein einsetzbaren Erfindungsprinzips auf einen selbstsperrenden Gurtaufroller mit einer den Gurt haltenden und in einem Gehäuse gelagerten Gurtwelle vorgesehen sein, dass das auf die Drehung der Gurtwelle in Abwickelrichtung ansprechende Massesystem aus einer Mehrzahl von über den Umfang der Gurtwelle verteilt angeordneten, um eine mittige gehäusefeste Lagerstelle pendelnd gelagerten zweiarmigen Pendelmassen besteht, die in den beiden Endstellungen ihrer Pendelbewegung mit einem an ihren beiden Enden angeordneten Zahn in die Außenverzahnung eines im Gefahrenfall an die Gurtwelle zu koppelnden und sich mit dieser drehenden Zahnrings eingreifen, derart, dass die Schwingung der jeweiligen Pendelmasse bei der Drehung des Zahnrings gegenüber den Pendelmassen durch das Abgleiten der Zahnflanken der an den Pendelmassen ausgebildeten Zähne an den Zahnflanken der Außenverzahnung des Zahnrings erzeugt wird. Um dieses Abgleiten sicherzustellen, ist gegebenenfalls eine flache, eventuell auch runde Verzahnung im Sinne einer Gleitverzahnung zu wählen. In jeweils alternativen Ausführungsformen kann hierbei vorgesehen sein, dass in symmetrischer Anordnung zwei, vier oder auch sechs einander gegenüberliegende Pendelmassen angeordnet sind, wobei die Erfindung nicht auf eine bestimmte Anzahl von Pendelmassen beschränkt ist. Um einer eventuell auftretende Unwucht beim Umlaufen der Pendelmassen zu vermeiden, kann vorgesehen sein, dass die Pendelmassen derart angeordnet und ausgelegt sind, dass sich deren Bewegung gegenseitig ausgleicht.

Soweit nach einem Ausführungsbeispiel der Erfindung vorgesehen ist, dass eine die Pendelmassen auf deren äußeren Umfang umgreifende Ringfeder mit an dieser ausgebildeten, jeweils die über den Zähnen der Pendelmassen liegenden Bereiche der Pendelmassen beaufschlagenden Vorsprüngen vorgesehen ist, wird damit aufgrund der über die Ringfeder erzeugten Vorspannung eine Ansprechschwelle für das Wirksamwerden der Pendelmassen festgelegt, so dass das aus den Pendelmassen mit Ringfeder bestehende Massesystem erst bei Überschreitung einer von der Drehung der Gurtwelle mit Verzahnungsring ausgehenden Anfangskraft in Schwingung versetzt wird.

Nach einem Ausführungsbeispiel der Erfindung ist vorgesehen, dass die Pendelmassen in ihrer Anordnung den Zahnring vollständig umgreifen und einander an ihren äußeren Enden überlappen; hiermit ist der Vorteil einer jeweiligen Übertragung der Bewegung der einzelnen Pendelmassen aufeinander verbunden, so dass die Schwingungsfrequenz besser eingehalten wird.

Nach weiteren Ausführungsbeispielen der Erfindung ist vorgesehen, dem Massesystem zusätzlich eine oder mehrere Federn zuzuordnen, wodurch ein Schwingsystem gebildet wird, mittels dessen eine Zeitsteuerung dadurch verwirklichbar ist, dass die Feder beziehungsweise die Federn die Eigenschwingung des Massesystems beziehungsweise der Pendelmassen dämpfen.

So ist nach einem ersten, diesbezüglichen Ausführungsbeispiel der Erfindung vorgesehen, dass die Pendelmasse an ihrem einen Ende mit einer zusätzlichen, die Schwingung der Pendelmasse steuernden Feder verbunden ist. Hierzu ist nach einem Ausführungsbeispiel vorgesehen, dass die Feder an ihrem anderen Ende ortsfest angeschlagen ist.

Die Zeitsteuerung kann dadurch verbessert werden, dass das auf die Pendelmasse einwirkende Federsystem durch zusätzliche Massen ergänzt ist, die ebenfalls dämpfend wirken. Mit der so möglichen Beeinflussung der Schwingzeiten wie auch der Schwingfrequenz kann die erfindungsgemäße Kraftbegrenzungseinrichtung auch an die unterschiedlichen Verzögerungscharakteristiken unterschiedlicher Fahrzeuge angepasst werden. Dabei sollte das Federmassesystem so ausgelegt werden, dass die auf die Pendelmasse einwirkende Dämpfungskraft im Eigenresonanzfall immer größer ist als die über die Bewegung des sich bewegenden Fahrzeugteils, beispielsweise über die Drehung der Gurtwelle mit Verzahnungsring, zugeführte Energie. Da die Pendelmassen mit einer hohen Frequenz, etwa bis 2.000 Hertz schwingen sollen, kann der Einsatz einer sehr harten Feder erforderlich sein.

So ist in einer ersten Ausführungsform vorgesehen, dass in die Feder zwischen ihrer Einhängung an der Pendelmasse und ihrer ortsfesten Befestigung eine zusätzliche Masse eingeschaltet ist. Mit einer Einschaltung einer zusätzlichen Masse kann eine Änderung der Schwingfrequenz beziehungsweise der Schwingzeit eingestellt werden, so dass das Massesystem an die Fahrzeugverzögerungscharakteristik unterschiedlicher Fahrzeuge angepasst werden kann.

In einer weiteren Ausführungsform kann vorgesehen sein, dass die Feder an ihrem anderen Ende an einem schwenkbar gelagerten zweiarmigen Hebel angeschlagen ist, dessen anderer Arm von einem mit dem Zahnring verbundenen Schaltnocken bei Drehung des Zahnringes beaufschlagbar ist.

Alternativ kann vorgesehen sein, dass die Feder mit ihrem anderen Ende an einem an der Pendelmasse angebrachten Arm angeschlagen ist und in die Feder zwischen ihrer Einhängung an der Pendelmasse und ihrer Einhängung an dem Arm eine zusätzliche Trägheitsmasse eingeschaltet ist.

Nach Ausführungsbeispielen ist vorgesehen, die Pendelmasse als Teil des in Schwingung versetzten Massesystems von einem ihre Schwingung bremsendem Bremselement beaufschlagen zu lassen, wobei die Einstellung einer entsprechenden Bremsung bzw. Dämpfung in Abhängigkeit von der Sitzposition des Fahrzeuginsassen erfolgen kann. Das Federmassesystem sollte so ausgelegt werden, dass die Bremskraft der Pendelmassen im Eigenresonanzfall immer größer ist als die zugeführte Energie. Dann bestimmt die Eigenfrequenz auch immer den Zeitraum des möglichen Gurtbandauslasses.

Nach Ausführungsbeispielen der Erfindung kann das Bremselement aus die Pendelmasse seitlich beaufschlagenden Bremsbacken oder aus einem die Schwingung der Pendelmasse dämpfenden Dämpfungselement bestehen, oder es kann vorgesehen sein, dass die Schwingung der Pendelmasse mittels einer elektromechanisch arbeitenden Steuervorrichtung regelbar bzw. abbremsbar ist.

In einer Ausführungsform der Erfindung kann das auf die Drehung der Gurtwelle in Abwickelrichtung ansprechende Massesystem auch im Inneren der hohl ausgebildeten und einen Hohlraum aufweisenden Gurtwelle angeordnet sein. In einem dazu vorgesehenen Ausführungsbeispiel kann vorgesehen sein, dass an der Gurtwelle in deren Hohlraum wenigstens eine pendelnd gelagerte zweiarmige Pendelmasse mit jeweils einem an ihren äußeren Enden angeordneten Zahn angeordnet ist, der in den beiden Endstellungen der Pendelbewegung der Pendelmasse jeweils in die Außenverzahnung eines sich axial in den Hohlraum der Gurtwelle erstreckenden und drehfest mit einem Profilkopf als Teil des gurtaufrollerseitigen Blockiersystems verbundenen Stabelement eingreift derart, dass die Schwingung der jeweiligen Pendelmasse bei der Drehung der Gurtwelle mit Pendelmasse gegenüber dem Stabelement durch das Abgleiten der Zahnflanken der an der Pendelmasse ausgebildeten Zähne an den Zahnflanken der Außenverzahnung des Stabelementes erzeugt wird.

In einer alternativen Ausführungsform der Erfindung in einer Anwendung auf einen selbstsperrenden Gurtaufroller mit einer den Gurt haltenden, in einem Gehäuse gelagerten Gurtwelle kann vorgesehen sein, dass das Massesystem aus einer gehäusefest gelagerten Pendelmasse mit einem in einer im Gefahrenfall umlaufenden Steuerkurve eingreifenden und dadurch die Schwingung der Pendelmasse steuernden Steuerstift besteht und die Steuerkurve an einem im Gefahrenfall an die Gurtwelle zu koppelnden und sich mit dieser drehenden Steuerrad ausgebildet ist derart, dass die Schwingung der Pendelmasse bei der Drehung des Steuerrades gegenüber dem Steuerstift durch die Bewegungen des von Pendelmasse getragenen Steuerstiftes in der Steuerkurve erzeugt wird.

Hiermit ist der Vorteil verbunden, dass die Auslegung der Steuerkurve die Schwingung nach Frequenz und Zeit einstellbar ist. So kann nach alternativen Ausführungsbeispielen der Erfindung vorgesehen sein, dass die Steuerkurve einem gleichmäßigen Verlauf mit einer konstanten Schwingungsfrequenz der Pendelmasse oder einen wechselnden Verlauf mit einer sich ändernden Schwingungsfrequenz der Pendelmasse aufweist. Ebenso kann auch bei diesem Ausführungsbeispiel vorgesehen sein, dass die Steuerkurve an ihrem Ende eine Halteausnehmung für den Steuerstift zum Festlegen der Pendelmasse aufweist.

Es kann weiterhin vorgesehen sein, dass eine zusätzliche Masse über ein Getriebe an die Pendelmasse gekoppelt ist, um wiederum eine Anpassung an die Fahrzeugverzögerungscharakteristiken unterschiedlicher Fahrzeuge vornehmen zu können.

Neben dem Einsatz des neuen Funktionsprinzips zur Kraftbegrenzung bei einer Gurtwelle als Teil eines Fahrzeugsicherheitssystems erstreckt sich der Erfindungsgedanke auch auf Anwendungen des Funktionsprinzips an anderen Stellen in einem Kraftfahrzeug. So kann nach einem Ausführungsbeispiel der Erfindung vorgesehen sein, dass die sich relativ zueinander bewegenden Teile ein fest mit dem Kraftfahrzeug verbundenes Teil und die im Crashfall linear bewegliche Lenksäule als linear bewegliches Bestandteil des Kraftfahrzeuges sind. Soweit also das Lenkrad mit der es tragenden Lenksäule nachgiebig angeordnet sein kann, ist vorgesehen, dass die Einschubbewegung der Lenksäule in ein fahrzeugfestes Teil gedämpft wird.

Alternativ kann vorgesehen sein, dass die sich relativ zueinander bewegenden Teile ein fest mit dem Kraftfahrzeug verbundenes Teil und ein im Crashfall beweglicher Teil des Fahrzeugrahmens als linear bewegliches Bestandteil des Kraftfahrzeuges sind. So kann bei einem Frontal- oder Heckaufprall ein Teil des Fahrzeugrahmens verschiebbar gegenüber einem anderen Teil des Fahrzeugrahmens angeordnet sein, wobei die Verschiebebewegung mittels des erfindungsgemäßen Funktionsprinzips dämpfbar ist.

Soweit heute schon Stoßstangen gegenüber dem Fahrzeug beweglich angeordnet sind um leichtere Zusammenstöße abzufangen, kann auch eine Einschubbewegung einer derartigen Stoßstange als im Crashfall bewegliches Karosserieteil zur Ausführung einer Kraftbegrenzung benutzt werden. Insofern ist nach einem Ausführungsbeispiel der Erfindung vorgesehen, dass die sich relativ zueinander bewegenden Teile ein fest mit dem Kraftfahrzeug verbundenes Teil und ein im Crashfall bewegliches Karosserieteil als linear beweglicher Bestandteil des Kraftfahrzeuges sind.

Wiederum sieht die Erfindung in einem weiteren Ausführungsbeispiel den Einsatz des neuen Kraftbegrenzungsprinzips bei einem linear arbeitenden Fahrzeugsicherheitssystem mit einem gegenüber einem fahrzeugfest angeordneten Bestandteil linear beweglichen, den Gurt haltenden Beschlagteil vor, dessen Bewegung einen begrenzten Auslass des Gurtes ermöglicht.

Bei derartigen linear beweglichen Teilen ist hinsichtlich einer konstruktiven Ausführung der Kraftbegrenzungseinrichtung nach einem Ausführungsbeispiel vorgesehen, dass das fahrzeugfest angeordnete Bestandteil zylinderförmig ausgebildet ist und der relativ dazu bewegliche Bestandteil ein in dem Zylinder bewegliches Rohr aufweist, wobei der Zylinder an seiner Innenwandung mit einer Verzahnung versehen ist und in dem Rohr wenigstens eine in dem Rohr pendelnd bis zum jeweiligen Anschlag an der Zylinderwandung gelagerte Pendelmasse angeordnet ist, die mit einander gegenüberliegend ausgebildeten Zähnen in ihren beiden Endstellungen jeweils in Eingriff mit der Verzahnung des Zylinders kommt derart, dass die Schwingung der Pendelmasse bei der Längsbewegung des Rohres gegenüber der Zylinderwandung durch das Abgleiten der Zahnflanken der an der Pendelmasse ausgebildeten Zähne an den Zahnflanken der Innenverzahnung des Zylinders erzeugt wird derart, dass die Bewegung des Rohres mit einer durch die Frequenz der Pendelbewegung definierten Vorschubgeschwindigkeit gesteuert ist.

Hierbei kann vorgesehen sein, dass in dem Rohr eine Mehrzahl von Pendelmassen mit jeweils einander gegenläufigen Pendelbewegungen angeordnet ist.

Zur Festlegung einer Ansprechschwelle kann vorgesehen sein, dass das Rohr in dem Zylinder durch eine Feder in seine Ausgangsstellung vorgespannt ist.

In der Zeichnung sind Ausführungsbeispiele der Erfindung wiedergegeben, welche nachstehend beschrieben sind. Es zeigen:

Fig. 1 ein Diagramm mit einer Darstellung des Zusammenhangs zwischen der Fahrzeugbeschleunigung "a", den Verformungsweg "s" am Fahrzeug und der Zeitdauer des Unfalls "t",

Fig. 2 ein Diagramm mit einer Darstellung des Zusammenhangs zwischen der Fahrzeugbeschleunigung "a", der wirksamen Masse des Insassen "m" und der am Schultergurt auftretenden Rückhaltekraft "f",

Fig. 3 eine Draufsicht auf die Blockierseite eines Sicherheitsgurtauf- rollers mit einem erfindungsgemäßen Massesystem als Kraftbegrenzungseinrichtung,

Fig. 4 den Gegenstand der Figur 3 in einer anderen Ausführungsform,

Fig. 5 den Gegenstand der Figur 3 in einer weiteren Ausführungsform,

Fig. 6 eine einzelne Pendelmasse des Massesystems gemäß Figur 3 mit einer zusätzlichen Feder in einer schematischen Darstellung,

Fig. 7 den Gegenstand der Figur 6 in einer anderen Ausführungsform,

Fig. 8 eine einzelne Pendelmasse des Massesystems gemäß Figur 3 mit einem zusätzlichen Federmassesystem in einer schematischen Darstellung,

Fig. 9 den Gegenstand der Figur 8 in einer anderen Ausführungsform,

Fig. 10 eine einzelne Pendelmasse des Massesystems mit einem zusätzlichen Dämpfungsmittel in einer schematischen Darstellung,

Fig. 11 den Gegenstand der Figur 10 in einer anderen Ausführungsform,

Fig. 12 den Gegenstand der Figur 10 in einer weiteren Ausführungsform,

Fig. 13 die Gurtwelle eines Sicherheitsgurtaufrollers mit dem in ihrem Inneren angeordneten Massesystem als Kraftbegrenzungs- einrichtung,

Fig. 14 den Gegenstand der Figur 3 beziehungsweise Figur 4 in einer weiteren, eine Steuerkurve beinhaltenden Ausführungsform,

Fig. 15 eine Draufsicht auf eine bei einem linear arbeitenden System angeordnete Kraftbegrenzungseinrichtung mit Massesystem,

Fig. 16 den Gegenstand der Figur 15 in einer anderen Ausführungsform,

Fig. 17 das Zusammenwirken der Kraftbegrenzungseinrichtung mit einem Fahrzeugsicherheitssystem für einen Fahrzeuginsassen in einer schematischen Darstellung.

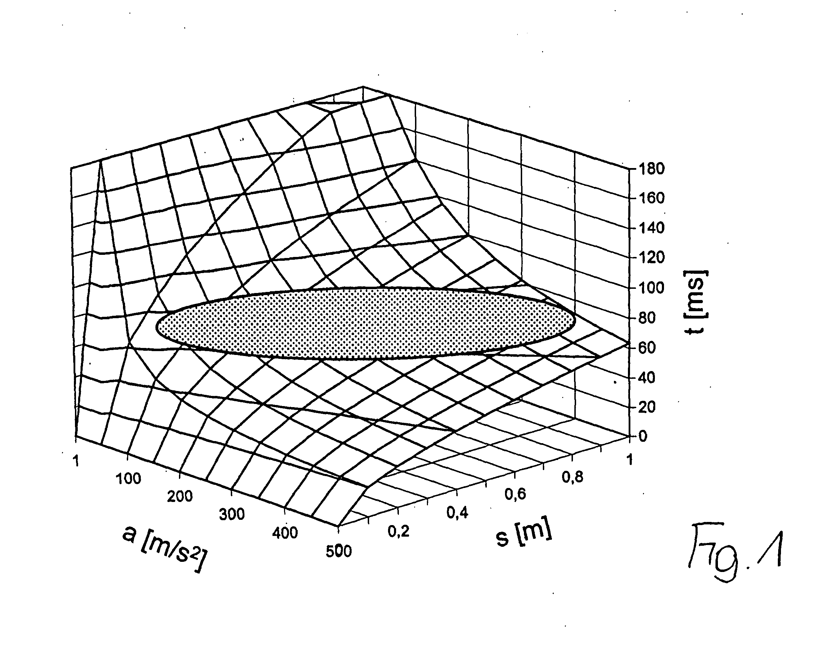

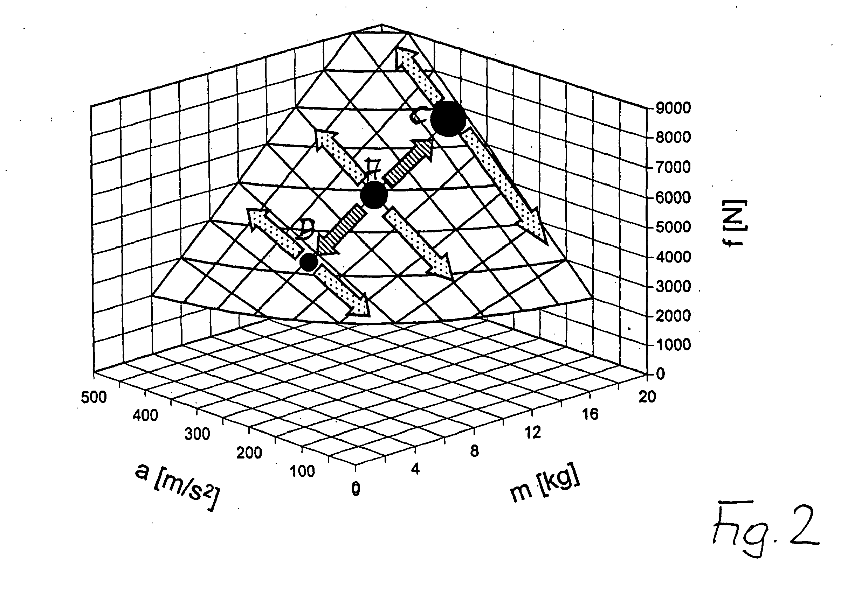

Die der Erfindung zugrundeliegenden Grundlagenüberlegungen seien zunächst noch einmal anhand der in Figuren 1 und 2 dargestellten Diagramme erläutert.

Aus der Darstellung gemäß Figur 1 ist ersichtlich, dass sich ein Unfallgeschehen unabhängig von den Rahmenbedingungen des Unfalls in einem engen Zeitfenster vollzieht, als dessen ungefährer Mittelwert die schon genannten 70 ms angesehen werden können. In Figur 1 ist die Fahrzeugverzögerung "a" über dem Verformungsweg "s" der betroffenen Fahrzeugteile und der Zeitdauer (t) zu einem Unfall aufgetragen. Entsprechende Crash-Versuche mit Kraftfahrzeugen zeigen, dass die Versuchsergebnisse im wesentlichen innerhalb der gepunktet dargestellten Fläche liegen, woraus sich insbesondere das enge Zeitfenster ergibt, in welchem sich die Verformung des Fahrzeuges (Verformungsweg s) in Abhängigkeit von dem Unfallimpuls, dass heißt der eintretenden Fahrzeugbeschleunigung, konkret der eintretenden Fahrzeugverzögerung vollzieht. Die durch die gepunktete Fläche dargestellten Messergebnisse bestätigen somit, dass die Kinematik im Crash dem grundlegenden Zusammenhang $t = \sqrt{2s/a}$ folgt, d. h. mit zunehmendem Verformungsweg ergibt sich ein härterer Puls, wobei die Crashdauer im wesentlichen konstant bleibt.

In Figur 2 ist der Zusammenhang zwischen wiederum der Fahrzeugbeschleunigung "a", der im Bereich des Schultergurtes einwirkenden (Brust)Masse eines Fahrzeuginsassen (m) und der am Schultergurt wirkende Gurtkraft (f) dargestellt. Mathematisch ergibt sich die Gurtkraft als Produkt aus Masse x Beschleunigung (f = m · a). Wie dargestellt, wird diese einfache mathematische Beziehung jedoch nicht für im Stand der Technik bekannte Gurtkraftbegrenzer, weil durch die zeitverzögert eintretende Verzögerung des Fahrzeuginsassen gegenüber dem Fahrzeug sich eine Geschwindigkeitsdifferenz zwischen der Bewegung des Kraftfahrzeuges und der Bewegung des Fahrzeuginsassen einstellt, die eine variable Zusatzgröße für die Fahrzeugbeschleunigung "a" in Figur 2 mit sich bringt. Somit hat für diesen Anwendungsfall die mathematische Beziehung f = m · a keine Gültigkeit.

Soweit im Stand der Technik bekannte Gurtkraftbegrenzer von einem fest eingestellten Kraftwert, beispielsweise 3.000 N ausgehen, können unterschiedliche Kombinationen von Beschleunigungen (a) und Massen (m) in den dreidimensionalen Koordinatensystem nur in einer zur Basisebene parallelen Ebene angesiedelt sein. Demgegenüber zeigt die im Diagramm gemäß Figur 2 aufgespannte Fläche die bei Anwendung der Erfindung in Abhängigkeit der Kombinationen von Fahrzeugbeschleunigungen (a) und Massen (m) jeweils unterschiedlich geltenden Rückhaltekräfte (f). So gilt der mittlere Punkt A für einen Lastfall von einer auf den Diagonalgurt wirkenden Masse von 14 kg und eine Beschleunigung von 350 m/s$^2$ entsprechend ungefähr 35g, für die sich eine Rückhaltekraft von etwa 5.000 N einstellt. Die Gesamtmasse des Insassen verteilt sich im Lastfall auf die beiden Gurtbandabschnitte und auf die drei Anschraubpunkte im Fahrzeug. Die in der Figur 2 angenommene Masse stellt dabei die auf den oberen Punkt des Diagonalgurtes wirkende Masse dar. Soweit erfindungsgemäß eine Geschwindigkeitsdifferenz zwischen dem Fahrzeug und der Person vermieden ist, bleibt die Fahrzeugbeschleunigung beziehungsweise Fahrzeugverzögerung bei anderen Insassen mit unterschiedlichen Insassendaten gleich, so dass für eine kleinere Person entsprechend Punkt B mit einer Masse von knapp 10 kg bei gleicher Fahrzeugbeschleunigung von 35 g eine Rückhaltekraft von rund 3.500 N festzustellen ist. Entsprechend gilt für den Insassen gemäß Punkt C mit einer (Brust)Masse von 20 kg eine entsprechend hohe Rückhaltekraft von ungefähr 6.500 N. Die gepunktet ausgeführten Pfeile zeigen dabei die sich einstellenden Rückhaltekräfte, wenn bei gleich bleibender (Brust)Masse der Fahrzeuginsassen die Fahrzeugbeschleunigung (a) absinkt, der Crash also geringer ausfällt. In diesem Fall kommt es zu einer linearen Absenkung der Rückhaltekräfte (f).

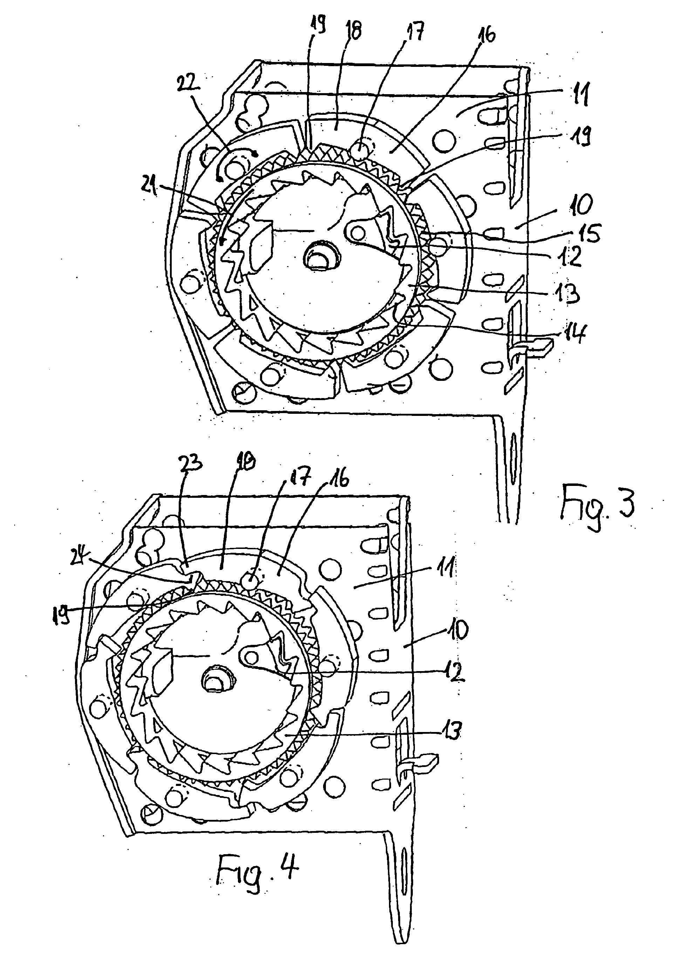

Hinsichtlich der konstruktiven Ausführungsbeispiele der Erfindung ist in Figur 3 ein selbstsperrender Sicherheitsgurtaufroller dargestellt, wie er beispielsweise auch dem gattungsbildenden Stand der Technik zu entnehmen ist. Der Sicherheitsgurtaufroller weist ein Gehäuse 10 mit einem U-förmigen Rahmen 11 auf, in welchem eine nicht dargestellte Gurtwelle als Träger eines darauf aufgewickelten Gurtbandes drehbar gelagert ist. Auf der Blockierseite des Sicherheitsgurtaufrollers beziehungsweise des Gehäuses 10, die in Figur 1 in einer Draufsicht dargestellt ist, ist auf der nicht dargestellten Gurtwelle eine Zahnscheibe 12 radial ausschwenkbar gelagert, die von einem am Gehäuse 10 drehbar gelagerten Verzahnungsring 13 mit einer Innenverzahnung 14 umschlossen ist. Die Verzahnung der Zahnscheibe 12 und die Innenverzahnung 14 des Verzahnungsringes 13 sind dabei so ausgelegt, dass bei Eingriff der Zahnscheibe 12 in die Innenverzahnung 14 des Verzahnungsringes 13 bei Drehung der Gurtwelle in Gurtauszugsrichtung entsprechend Pfeil 21 der Verzahnungsring 13 in Richtung Pfeil 21 mitgenommen wird.

Der Verzahnungsring 13 ist außenseitig mit einer Außenverzahnung 15 versehen. Weiterhin ist der Verzahnungsring 13 auf seinem äußeren Umfang von sechs symmetrisch angeordneten Pendelmassen 16 umgeben und eingeschlossen, wobei jede Pendelmasse 16 an dem Gehäuse 10 mittels eines zentral angeordneten Drehlagers 17 derart gelagert ist, dass jede Pendelmasse 16 eine durch den Pfeil 22 gekennzeichnete Pendelbewegung um ihr jeweiliges Drehlager 17 ausführen kann. Die Pendelmasse 16 ist dabei jeweils zweiarmig mit beiderseits des Drehlagers 17 sich erstreckenden Armen 18 ausgebildet, wobei an den äußeren Enden der Arme 18 jeweils ein Zahn 19 angeordnet ist, mit welchem die jeweilige Pendelmasse in ihren beiden Pendel-Endstellungen jeweils in die Außenverzahnung 15 des Verzahnungsringes 13 eingreift. Die Verzahnungen der Außenverzahnung 15 beziehungsweise der Zähne 19 der Pendelmasse 16 sind dabei so ausgelegt, dass bei Drehung des Verzahnungsringes 13 in der Drehrichtung gemäß Pfeil 21 die zugehörigen Zahnflanken aneinander abgleiten und durch den sich drehenden Verzahnungsring 13 die Pendelmassen 16 in eine Pendelbewegung versetzt beziehungsweise darin gehalten werden dadurch, dass der Zahn 19 auf der einen Seite der Pendelmasse in Eingriff mit der Außenverzahnung 15 des Verzahnungsringes 13 steht, während der gegenüberliegende Zahn 19 außer Eingriff mit der Außenverzahnung steht, wobei bei Weiterdrehung des Verzahnungsringes 13 gegenüber dieser Pendelmasse der zunächst in Eingriff stehende Zahn 19 der Pendelmasse 16 ausgeschoben und dadurch die Pendelmasse 16 derart verschwenkt wird, dass ihr gegenüberliegender Zahn 19 in Eingriff mit der Außenverzahnung 15 des Verzahnungsringes 13 geschoben wird. Bei Fortdrehung des Verzahnungsringes 13 gegenüber dieser Pendelmasse vollzieht sich der Bewegungsvorgang umgekehrt, so dass die Pendelmasse 16 bei Drehung des Verzahnungsringes 13 durch wechselseitigen Eingriff ihrer äußeren Zähne 19 in einer Pendelbewegung gehalten wird, wobei gleichzeitig aber der jeweils wechselnde Eingriff der Zähne 19 der Pendelmasse 16 eine ungehinderte Drehung des Verzahnungsringes 13 nicht zulässt, vielmehr in Abhängigkeit von der Frequenz der Pendelbewegung die mögliche Drehgeschwindigkeit des Verzahnungsringes 13 festgelegt ist.

Im Falle eines Unfalles wird über ein nicht dargestelltes, bei selbstsperrenden Gurtaufrollern jedoch hinreichend bekanntes gurtbandsensitives und/oder fahrzeugsensitives Steuersystem die Zahnscheibe 12 in Eingriff mit der Innenverzahnung 14 des Verzahnungsringes 13 ausgelenkt. Soweit zunächst der Verzahnungsring 13 mittels eines nicht dargestellten Abreißpins festgelegt ist, um eine Ansprechschwelle für das Ingangsetzen des Massesystems festzulegen, kommt es nach Überschreiten einer entsprechenden Kraft zu einer Drehung des Verzahnungsringes 13 in Richtung des Pfeils 21. Hierbei schiebt - wie beschrieben - der Verzahnungsring 13 mit seiner Außenverzahnung 15 die auf seinem äußeren Umfang angeordneten Pendelmassen 16 mit deren Zähnen 19 jeweils auf deren einer Seite aus, wobei die Pendelmassen 16 mit den auf ihrer anderen Seite angeordneten Zähnen 19 wieder in die Außenverzahnung 15 eingreifen. Während dieses Vorganges werden die einzelnen Pendelmassen 16 jeweils abwechselnd beschleunigt und verzögert, wodurch die Energie abgebaut wird. Je größer dabei die auf die Pendelmassen einwirkenden Beschleunigungs-kräfte sind, umso größer sind die gleichzeitig aufgrund deren Pendelbewegung auftretenden Verzögerungskräfte. Somit kann sich der Verzahnungsring und damit wegen dessen Ankopplung über die Zahnscheibe 12 auch die Gurtwelle nur mit derjenigen Drehgeschwindigkeit drehen, die von den im Takt schwingenden Pendelmassen zugelassen wird, so dass der Auszug am Gurtband durch Drehung der Gurtwelle in Abwickelrichtung allein von der durch die Drehbewegung der Gurtwelle angestoßenen beziehungsweise eingeleiteten Schwingung des Massesystems bestimmt ist und damit unabhängig von der auf das Gurtband einwirkenden Gurtauszugskraft ist.

Während im Stand der Technik der Betrag des ausgezogenen Gurtbandes im Wesentlichen durch die Größe der einwirkenden und beispielsweise der einen als Kraftbegrenzungseinrichtung eingesetzten Torsionsstab mehr oder weniger verdrillenden Gurtkraft bestimmt war, ist bei dem erfindungsgemäß eingesetzten Massesystem der Betrag des ausziehbaren beziehungsweise des ausgezogenen Gurtbandes allein von dem Zeitraum abhängig, während dessen das Massesystem arbeitet. Soweit erfahrungsgemäß ein Unfallgeschehen nach etwa 70 ms abgeschlossen ist, kann das Massesystem so ausgelegt werden, dass seine Funktion nach etwa diesem Zeitraum endet, so dass kein weiterer Gurtauszug mehr erfolgt und das Gurtband über den stillstehenden Verzögerungsring gehäusefest fixiert ist. Wie nicht weiter dargestellt, kann vorgesehen sein, dass eine am Ende des eingestellten Zeitabschnitts wirksam werdende, eine Ruhigstellung des Massesystems bewirkende Schwingungsabschaltung vorgesehen ist.

Bei dem dargestellten Ausführungsbeispiel ist das aus den Pendelmassen 16 bestehende Massesystem am Gehäuse 10 des Gurtaufrollers angeordnet; es ist auch möglich, dieses Massesystem an der zugeordneten Stirnseite der Gurtwelle selbst anzuordnen.

Das aus Figur 4 ersichtliche Ausführungsbeispiel unterscheidet sich von dem zuvor beschriebenen Ausführungsbeispiel dadurch, dass die über den Umfang des Verzahnungsringes 13 verteilt angeordneten Pendelmassen 16 sich in der Drehrichtung gemäß Pfeil 21 überlappen, indem an der einen Pendelmasse 16 ein in Drehrichtung vorstehender Überlappungsvorsprung 23 ausgebildet ist, der auf einem an der in Drehrichtung benachbarten Pendelmasse 16 ausgebildeten Überlappungsrücksprung 24 aufliegt. Auf diese Weise kann auf die Ausbildung eines Zahns 19 unter dem Überlappungsvorsprung verzichtet werden. Damit ist es möglich, die Pendelbewegung der einzelnen Pendelmassen 16 zusätzlich zu synchronisieren.

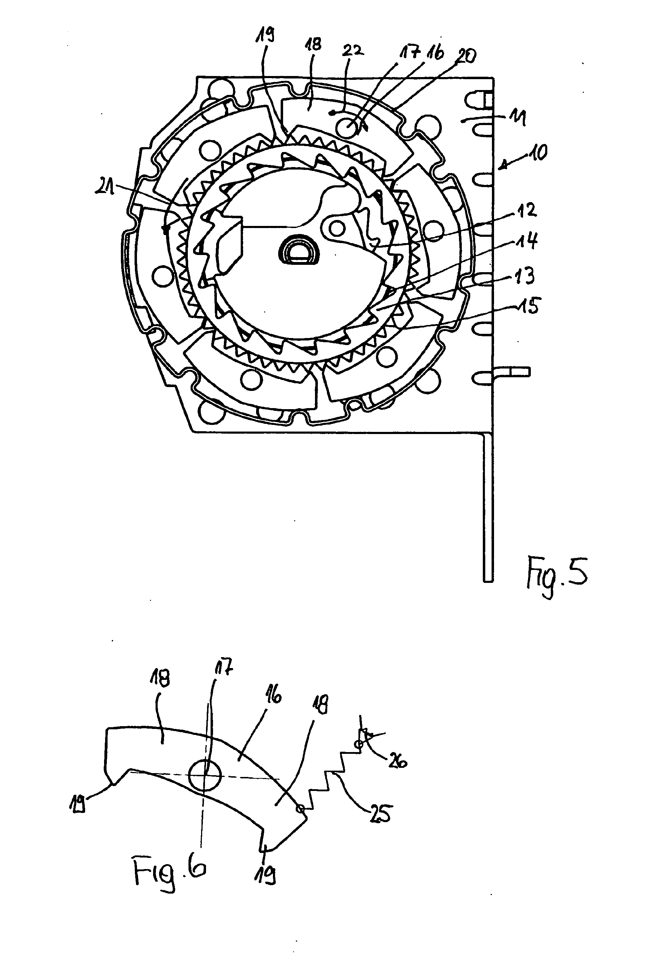

Das in Figur 5 dargestellte Ausführungsbeispiel entspricht der zu Figur 3 beschriebenen Ausführungsform. Anstelle des zu Figur 3 erwähnten Abreißstiftes ist bei dem in Figur 5 dargestellten Ausführungsbeispiel eine die Pendelmassen außen umschließende Ringfeder 20 vorgesehen, die alle Pendelmassen einheitlich vorspannt. Mit dieser Ringfeder wird eine Anfangskraft definiert, die überwunden werden muss, bevor das Massesystem zu arbeiten beginnt. Insofern führen geringfügige Belastungen der Gurtwelle mittels einer am Gurtband angreifenden Auszugskraft unterhalb der durch die Ringfeder 20 definierten Ansprechschwelle nicht zu einer Drehung des Verzahnungsringes 13 mit der dadurch angestoßenen Bewegung der Pendelmassen 16 des Massesystems. Gleichzeitig können die jeweiligen Verzahnungen und die Ringfeder 20 derart ausgebildet und festgelegt werden, dass am Ende des Kraftbegrenzungsvorganges mit einem Ruhen des Massesystems die eigentliche Blockierverzahnung des Gurtaufrollers immer so zu Stehen kommt, dass die Synchronisation der Steuerelemente des selbstsperrenden Gurtaufrollers für die gurtbandsensitive und/oder die fahrzeugsensitive Blockierung gegeben ist. Damit ist es möglich, die durch das Massesystem angestoßene Funktion der Kraftbegrenzung mehrfach hintereinander zu nutzen.

Weiterhin kann bei dem Einsatz mehrerer Pendelmassen vorgesehen sein, dass diese entweder synchron arbeiten, oder sich auch asynchron bewegen. Im Einzelfall wird dadurch das Maß der Kraftbegrenzung beeinflusst.

Es kann zweckmäßig sein, die Bewegung der Pendelmassen 16 zusätzlich zu beeinflussen insbesondere mit Blick auf eine beabsichtigte Zeitsteuerung. So können hierzu an der Pendelmasse 16 beziehungsweise den Pendelmassen 16 jeweils Federsysteme oder auch Federmassesysteme oder andere Brems- oder Dämpfungselemente angreifen, um die Schwingzeit und/oder die Schwingfrequenz der Pendelmassen zu beeinflussen. Dabei können die zusätzlichen Steuerelemente so ausgelegt werden, dass der über die von den Pendelmassen zugelassene Drehung des Verzahnungsringes 13 bestimmte Gurtbandauslaß variabel zum Fahrzeugpuls einstellbar ist.

In der einfachsten Ausführungsform gemäß Figur 6 ist eine Feder 25 vorgesehen, die mit ihrem einen Ende an einem Arm 18 einer zugeordneten Pendelmasse 16 angeschlagen ist und mit ihrem anderen Ende an einem gehäusefesten Festlager 26. Soweit bei einer Pendelbewegung der Pendelmasse 16 in die eine Richtung zusätzlich die Kraft der Feder 25 überwunden werden muss, wird damit die Zeit der Pendelbewegung eingeschränkt.

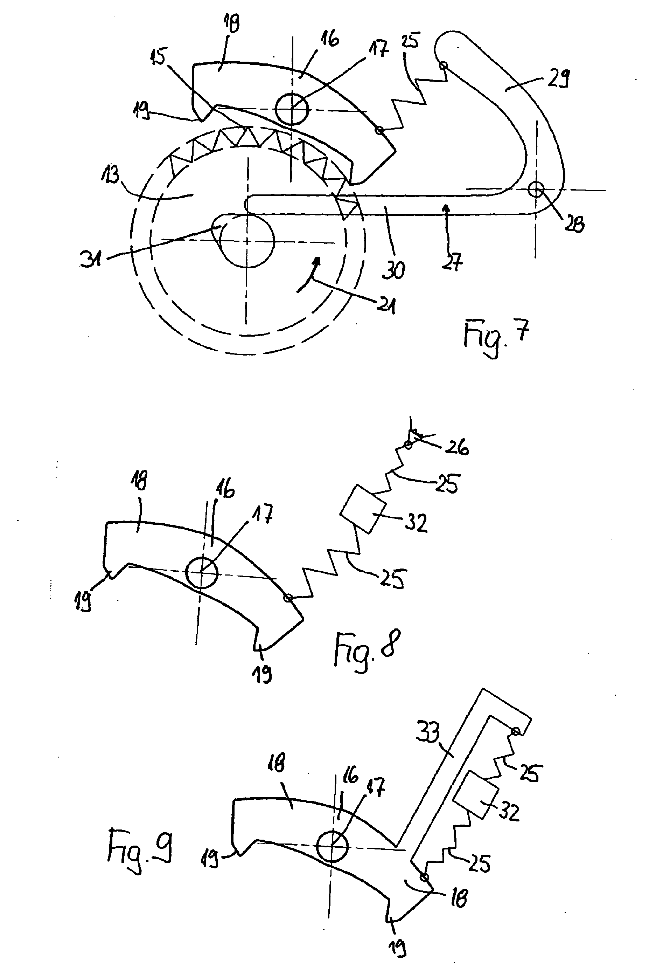

Bei dem in Figur 7 dargestellten Ausführungsbeispiel ist das zugeordnete Ende der Feder 25 an einem gesonderten Hebel 27 angeschlagen, der um einen gehäusefesten Drehpunkt 28 drehbar angeordnet ist. Der Hebel 27 ist zweiarmig mit einem ersten Arm 29 als Anschlagpunkt für die Feder 25 und einen zweiten Arm 30 ausgebildet, wobei der zweite Arm 30 in den Drehbereich des Verzahnungsringes 13 hineinreicht und hier an einem an dem Verzahnungsring 13 ausgebildeten Nocken 31 anliegt. Bei Drehung des Verzahnungsringes 13 wird zu einem vorgegebenen Zeitpunkt durch den an den Hebel 27 anschlagenden Nocken 31 die Kraft der Feder 25 verändert und somit das Pendelverhalten der zugeordneten Pendelmasse 16 beeinflusst.

Bei den in Figuren 8 und 9 dargestellten Ausführungsbeispielen ist das Federsystem gemäß Figur 6 durch eine zusätzliche Masse 32 ergänzt, so dass ein Federmassesystem entsteht, welches die Schwingfrequenz und die Schwingzeit der zugeordneten Pendelmasse 16 ebenfalls beeinflusst. Hierzu ist bei dem in Figur 8 dargestellten Ausführungsbeispiel in die zweigeteilt ausgeführte Feder 25 eine zusätzliche Masse 32 eingeschaltet.

Bei dem in Figur 9 dargestellten Ausführungsbeispiel ist die Feder 25 einschließlich Masse 32 mit ihrem einen Ende an der Pendelmasse 16 und mit ihrem anderen Ende an einem selbst an der Pendelmasse 16 befindlichen Haltearm 33 angeschlagen.

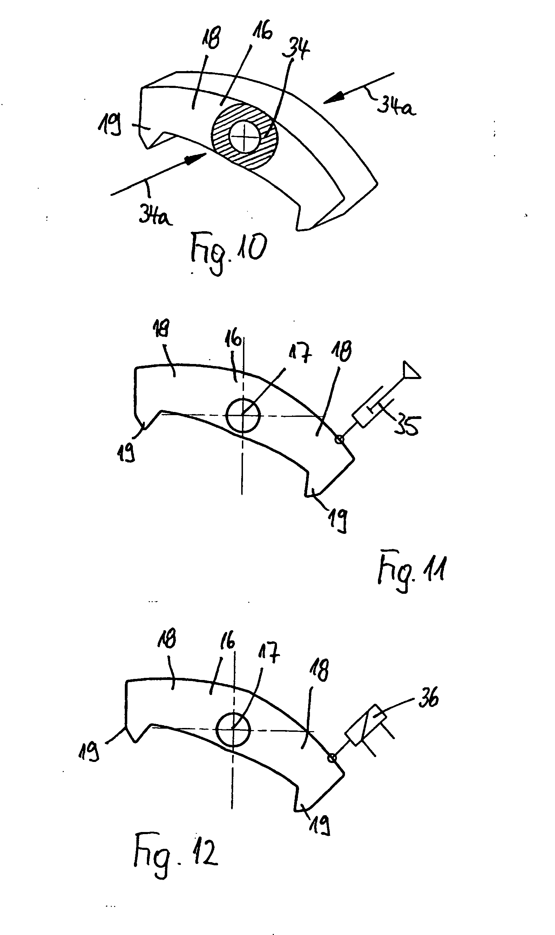

Eine Steuerung der Pendelbewegung ist weiterhin möglich, soweit gemäß Figur 10 an der Pendelmasse 16 ein durch Schraffur gekennzeichnetes Bremselement 34 angreift, welches eine durch Pfeile 34a angedeutete Bremskraft auf die Pendelmasse 16 ausübt.

Bei dem in Figur 11 dargestellten Ausführungsbeispiel ist ein mechanisch arbeitendes Dämpfungselement 35 vorgesehen, welches beispielsweise als Kolben-Zylinderanordnung ausgebildet sein kann.

Bei dem in Figur 12 dargestellten Ausführungsbeispiel ist der Pendelmasse 16 ein elektromechanisch arbeitendes Dämpfungselement 36 zugeordnet.

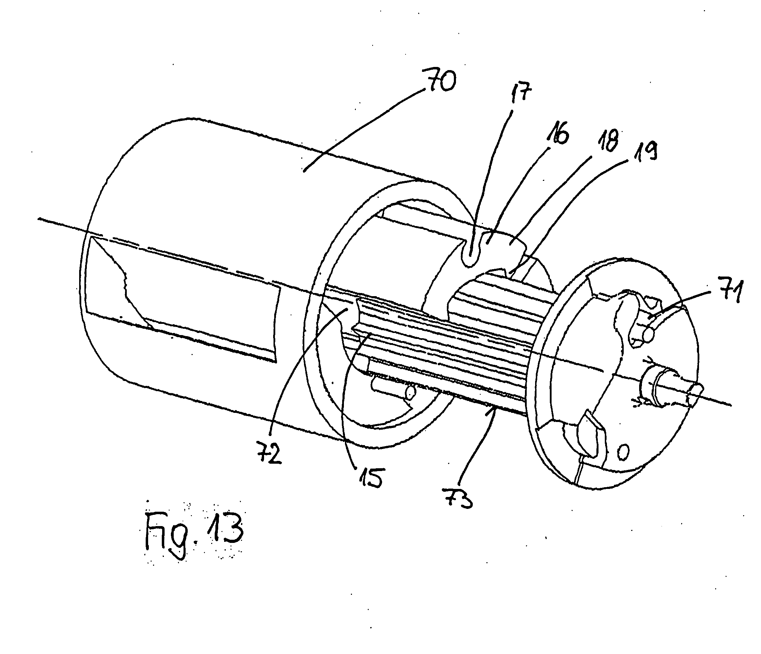

In Figur 13 ist die Unterbringung des als Kraftbegrenzungsvorrichtung arbeitenden Massesystems im Inneren der Gurtwelle eines Sicherheitsgurtaufrollers dargestellt. Das Massesystem ist dabei wie das zu Figur 3 beziehungsweise zu Figuren 3 bis 5 beschriebene Massesystem aufgebaut. Soweit bei einem im Stand der Technik bekannten Sicherheitsgurtaufroller die zugehörige Gurtwelle 70 stirnseitig mit einem im Auslösefall gehäusefest zu verriegelnden Profilkopf 71 derart verbunden ist, dass sich zum Zwecke der Kraftbegrenzung die Gurtwelle 70 relativ zu dem blockierten Profilkopf 71 weiterdrehen kann, ist die Gurtwelle 70 als Hohlkörper mit einem inneren Hohlraum 72 ausgebildet, wobei an der Wandung der Gurtwelle 70 innseitig über den Umfang verteilt entsprechende Pendelmassen 16 mit äußeren Zähnen 19 gelagert sind, wie dies zu Figur 3 beschrieben ist. Die zugehörige Außenverzahnung 15 zum Eingriff der Pendelmasse 16 mit Zähnen 19 ist an einem von dem Profilkopf 71 getragenen und axial in den Hohlraum 72 der Gurtwelle 70 reichenden Stabelement 73 ausgebildet, welches fest mit dem Profilkopf 71 verbunden ist. Kommt es im Blockierfall zu einer Blockierung des Profilkopfes 71, so führt der anhaltende Gurtzug an dem auf die Gurtwelle 70 aufgewickelten Gurtband zu einem Weiterdrehen der Gurtwelle 70 gegenüber dem Profilkopf 71 beziehungsweise dem damit fest verbundenen Stabelement 73, wobei durch die Weiterdrehung der Gurtwelle die im Hohlraum 72 angeordneten Pendelmassen 16 mit ihren Zähnen 19 jeweils an der Außenverzahnung 15 des Stabelementes 73 abgleiten, so dass die zur Kraftbegrenzung herangezogene Pendelbewegung der Pendelmassen 16 erzeugt wird.

Wie nicht weiter dargestellt, kann zum Antrieb der Pendelmasse beziehungsweise Pendelmassen nicht die von der Gurtbandkraft hervorgerufene Drehung des Verzahnungsringes herangezogen sein, vielmehr ist es auch möglich, einen nach Art eines Uhrwerks arbeitenden Fremdantrieb vorzusehen, beispielsweise in Form eines vorgespannten Federmassesystems, welches die Bewegung der Pendelmassen über einen vorgegebenen Zeitraum erregt beziehungsweise steuert. Hierbei kann zwischen der Pendelmasse und dem Fremdantrieb ein Getriebe angeordnet sein, welches sowohl selbsthemmend als auch nicht-selbsthemmend ausgelegt sein kann.

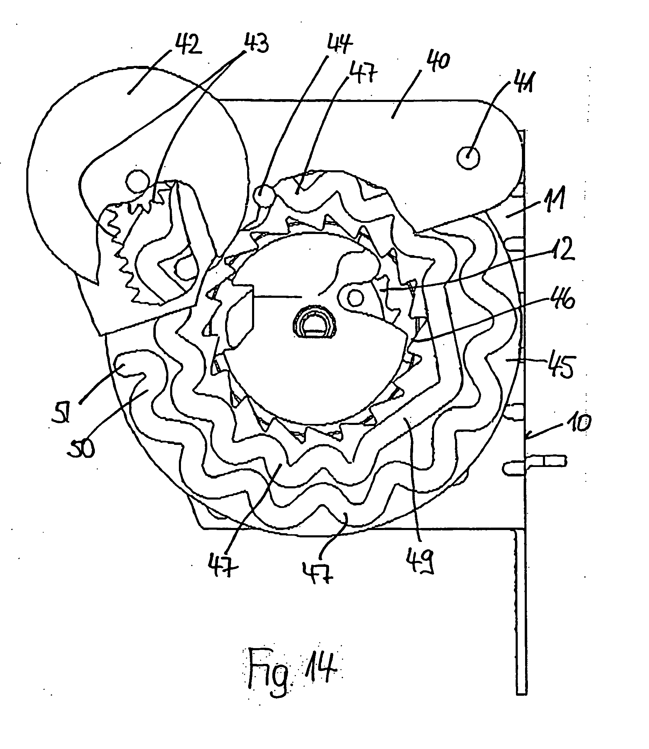

Das in Figur 14 dargestellte Ausführungsbeispiel entspricht im Wesentlichen den zu Figuren 3 und 4 dargestellten Ausführungsbeispielen, beruht jedoch auf einer andersartigen Einleitung der Drehbewegung der Gurtwelle in die Pendelschwingung einer zugeordneten Pendelmasse. Bei diesem Ausführungsbeispiel ist nur eine Pendelmasse 40 um einen gehäusefesten Drehpunkt 41 pendelnd angeordnet, wobei am freien Ende der Pendelmasse 40 eine zusätzliche Masse 42 aufgesetzt ist, die über ein Getriebe 43 an die Pendelmasse 40 angeschlossen ist. Hiermit wird die Massenträgheit der Pendelmasse 40 insgesamt erhöht, und zwar unter Berücksichtigung des zwischengeschalteten Getriebes 43. Die Pendelmasse 40 greift mit einem von ihr abstehenden Steuerstift 44 in ein an dem Gehäuse 10 des Gurtaufrollers drehbar angeordnetes Steuerrad 45 ein, wobei das Steuerrad 45 ähnlich dem Verzahnungsring 13 mit einer Innenverzahnung 46 versehen ist, in welche die aussteuerbare Zahnscheibe 12 einsteuerbar ist derart, dass die Drehbewegung der Gurtwelle in Richtung des Pfeils 21 in eine entsprechende Drehbewegung des Steuerrades 45 umsetzbar ist.

In dem Steuerrad 45 ist eine spiralförmig verlaufende, in Form einer stirnseitig in das Steuerrad 45 eingebrachten Vertiefung ausgebildete Steuerkurve 47 vorgesehen, in welcher der Steuerstift 44 der Pendelmasse 40 geführt ist. Die vorgegebene Steuerkurve 47 hat einen solchen Verlauf, dass damit entsprechende Pendelbewegungen der Pendelmasse 40 mit zusätzlicher Masse 42 um den Drehpunkt 41 erzeugt werden. Die Steuerkurve 47 ist dabei in ihrem Abschnitt 49 erkennbar flacher gestaltet, so dass in diesem Bereich der Gurtbandauslaß über der Zeiteinheit größer ist und die Gurtbandkraft entsprechend sinkt. Im Endbereich 50 der Steuerkurve 47 weist die Steuerkurve 47 wiederum einen steileren Verlauf auf, um eine größere Verzögerung zu erreichen und dann in einer Stoppausnehmung 51 zu enden, bei deren Erreichen seitens des Steuerstiftes 44 die weitere Pendelbewegung der Pendelmasse 40 und damit auch der mögliche Gurtbandauslaß beendet ist. Die in ihrer Auslegung veränderlich auslegbare Steuerkurve 47 ermöglicht somit eine Anpassung des jeweils gesteuert vorgegebenen Gurtbandauslaßes an die jeweilige Verzögerungscharakteristik des betreffenden Fahrzeuges.

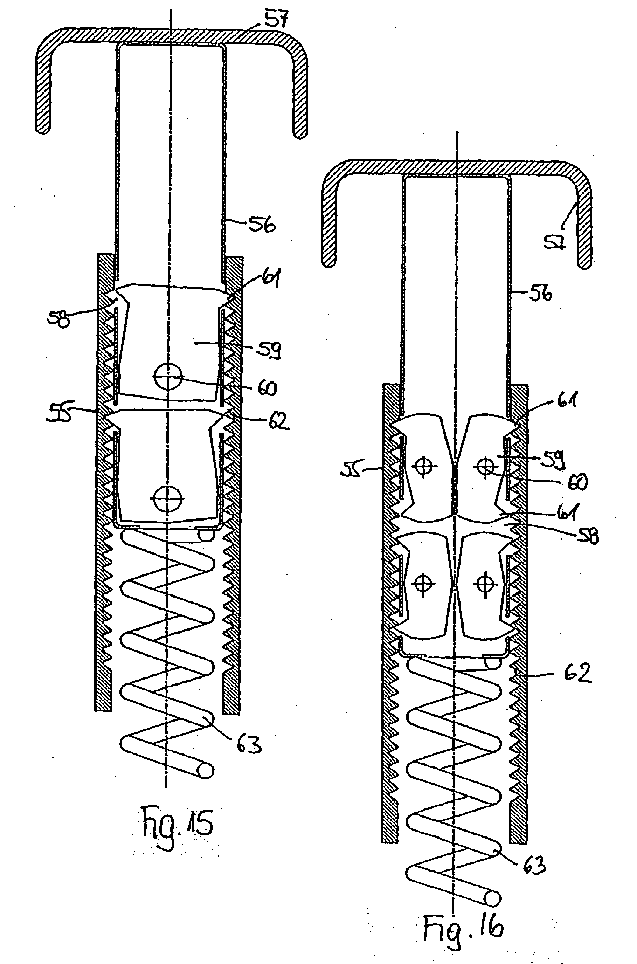

In den Figuren 15 und 16 schließlich ist ein linear arbeitenden System dargestellt, bei dem die im Crashfall auftretende Relativbewegung seiner Bestandteile zueinander in eine Kraftbegrenzung umzusetzen ist. Hierbei kann es sich beispielsweise um eine in ein fahrzeugfestes Teil einschiebbare Lenksäule als Träger des Lenkrades handeln. Im einzelnen ist in Figur 15 ein als Zylinder 55 ausgebildetes fahrzeugfestes Teil vorgesehen, welches mit einer Innenverzahnung 62 versehen ist. In dem Zylinder 55 ist eine rohrförmige Lenksäule 56 als Träger eines Lenkrades 57 verschiebbar geführt, in der bei dem dargestellten Ausführungsbeispiel zwei Pendelmassen 59 um fixe Drehpunkte 60 drehbeweglich angeordnet sind. Die Lenksäule 56 weist einander gegenüberliegende Durchbrechungen 58 auf, durch die an den Pendelmassen 59 angeordnete Zähne 61 bei entsprechenden Pendelbewegungen der Pendelmasse 59 bis zum Eingriff in die Innenverzahnung 62 des Zylinders 55 hindurch treten können. Der Bewegungsablauf vollzieht sich wie zu Figur 3 beschrieben, indem bei einem Einschub der Lenksäule 56 in den Zylinder 57 die Zähne 61 der Pendelmassen 59 auf der einen Seite des Zylinders 55 von der Innenverzahnung 62 abgleiten und somit davon freikommen und gleichzeitig aufgrund ihrer Pendelbewegung auf der gegenüberliegenden Seite in Eingriff mit der Innenverzahnung 62 des Zylinders 55 gelangen. Zur Abstützung der Einschubbewegung ist in dem Zylinder 55 noch eine Feder 63 angeordnet, welche die zu überwindende Anfangskraft definiert und gleichzeitig auch für eine Rückstellung der Lenksäule 56 nach Beendigung des Kraftbegrenzungsvorganges sorgen kann, wie dies im Grundsatz auch zu den Ausführungsbeispielen gemäß Figuren 3 und 5 beschrieben ist.

Bei dem in Figur 16 dargestellten Ausführungsbeispiel sind im Grundsatz gleiche Verhältnisse gegeben, wobei anstelle der in Figur 15 dargestellten zwei Pendelmassen 59 nun vier Pendelmassen 59 vorgesehen sind, die sich in der Längsrichtung der Lenksäule 56 erstrecken und entsprechend zweiarmig mit an jedem Arm angeordneten Zähnen 61 ausgebildet sind. Insofern ist die zu Figur 1 beschriebene Funktion der dortigen Pendelmassen 16 im Grundsatz auf das Ausführungsbeispiel gemäß Figur 16 zu übertragen.

Wie nicht weiter dargestellt, ist eine derartige Anordnung auch anwendbar bei einem linear arbeitenden Sicherheitsgurtsystem, indem beispielsweise an Stelle der Lenksäule 56 ein Beschlagteil als Träger eines Sicherheitsgurtes in den Zylinder 55 einschiebbar ist. In gleicher Weise kann vorgesehen sein, dass hier Relativbewegungen eines beweglichen Fahrzeugteils wie einer Stoßstange oder eines Teilbereichs eines Fahrzeuglängsträgers in den Zylinder 55 als fahrzeugfestes Teil vorgesehen sein können.

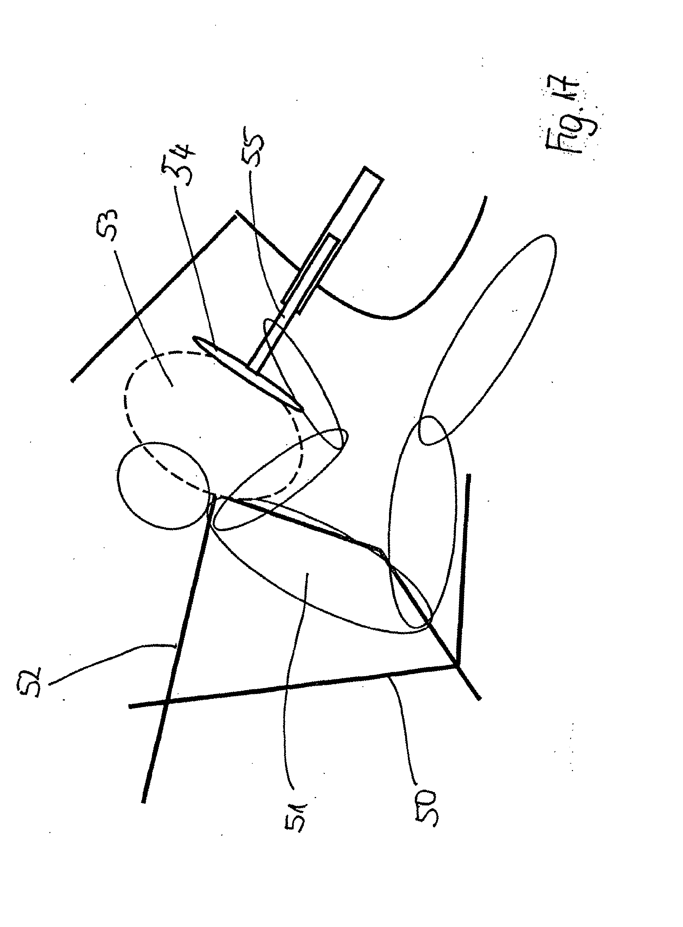

Das Zusammenwirken eines zeit- und geschwindigkeitsgesteuertem Gurtauslasses gemäß dem vorstehend erläuterten Ausführungsbeispiel lässt sich anhand der Figur 17 nochmals verdeutlichen. Ein auf einem Sitz 70 sitzender Fahrzeuginsasse 71 ist am Ende des durch den gesteuerten Auslass des Gurtbandes 72 ermöglichten Vorverlagerungsweges dargestellt, an welchen der Kopf des Insassen 71 auf einen sich aufblasenden Airbag 73 auftrifft. Der Airbag 73 hat sich dabei aus einem Lenkrad 74 entfaltet, welches seinerseits an einer einschiebbar ausgestalteten Lenksäule 76 sitzt. Da die Geschwindigkeit des Auslasses des Gurtbandes 72 von einem nicht dargestellten Gurtaufroller vorgegeben ist, kann die Aufblasgeschwindigkeit beziehungsweise die Ventilierungsgeschwindigkeit des Airbags 73 einerseits wie auch die Einschubgeschwindigkeit der Lenksäule 76 entsprechend eingestellt werden, wobei die Summe der auf den Airbag bezogenen Geschwindigkeit und der auf die Lenksäule bezogenen Geschwindigkeit der Gurtauslassgeschwindigkeit entsprechen sollte. Bei einer derartigen Auslegung ergibt sich eine insgesamt geringstmögliche Belastung des Fahrzeuginsassen 71.

**Patentansprüche**

1. Kraftbegrenzungseinrichtung zum Einsatz in einem Kraftfahrzeug, die zur Einstellung der Dämpfung einer in einer Gefahrensituation in dem Kraftfahrzeug zwischen zwei sich relativ zueinander bewegenden Teilen auftretenden Kraft eingerichtet ist, **dadurch gekennzeichnet, dass** die Kraftbegrenzungseinrichtung durch ein im Gefahrenfall mit einer vorgegebenen Frequenz in Schwingung versetztes Massesystem (16, 40, 59) gebildet ist, welches die Bewegung wenigstens eines sich bewegenden Teils (12, 13, 56) im Verhältnis zu dem anderen Teil mit einer in Abhängigkeit von seiner Schwingungsfrequenz definierten Geschwindigkeit steuert.

2. Kraftbegrenzungseinrichtung nach Anspruch 1, **dadurch gekennzeichnet, dass** die sich relativ zueinander bewegenden Teile Bestandteil eines Fahrzeugsicherheitssystems sind, welches einen fahrzeugfesten Rahmen (11) und eine sich gegenüber dem Rahmen (11) drehende Gurtspule (12) als Träger eines den angeschnallten Fahrzeuginsassen halternden Gurtes umfasst, wobei in einem Crashfall das in Schwingung versetzte Massesystem (16, 40) einen begrenzten Auslass des Gurtes durch eine gesteuerte Drehung der Gurtwelle (12) mit einer durch die Frequenz des in Schwingung versetzten Massesystems (16, 40) definierten Auslassgeschwindigkeit steuert.

3. Kraftbegrenzungseinrichtung nach Anspruch 2, **dadurch gekennzeichnet, dass** die Anregung des Massesystems (16, 40) zur Erreichung seiner Schwingungsfrequenz durch den im Gefahrenfall eintretenden Gurtbandauszug erfolgt und der Gurtauslass in Abhängigkeit von der Zeitdauer der einwirkenden Gurtauszugskraft bestimmt ist.

4. Kraftbegrenzungseinrichtung nach Anspruch 3, **dadurch gekennzeichnet, dass** der Gurtbandauszug durch mechanisch zusammenwirkende Bauteile (12, 13) in die Schwingungsanregung des Massesystems umsetzbar ist.

5. Kraftbegrenzungseinrichtung nach Anspruch 1 oder 2, **dadurch gekennzeichnet, dass** die Anregung des Massesystems (16, 40) zur Erreichung seiner Schwingungsfrequenz durch einen im Gefahrenfall auslösbaren und über eine vorgegebene Zeitdauer wirksamen Fremdantrieb erfolgt.

6. Kraftbegrenzungseinrichtung nach Anspruch 5, **dadurch gekennzeichnet, dass** der Fremdantrieb als vorgespanntes Federmassesystem ausgebildet ist.

7. Kraftbegrenzungseinrichtung nach einem der Ansprüche 1 bis 6, **dadurch gekennzeichnet, dass** eine über den Zeitabschnitt konstante Schwingungsfrequenz des Massesystems (16, 40, 59) eingestellt ist.

8. Kraftbegrenzungscinrichtung nach einem der Ansprüche 1 bis 6, **dadurch gekennzeichnet, dass** eine über den Zeitabschnitt degressive Schwingungsfrequenz des Massesystems (16, 40, 59) eingestellt ist.

9. Kraftbegrenztmgseinrichtung nach einem der Ansprüche 1 bis 6, **dadurch gekennzeichnet, dass** eine über den Zeitabschnitt progressive Schwingungsfrequenz des Massesystems (16, 40, 59) eingestellt ist.

10. Kraftbegrenzungseinrichtung nach einem der Ansprüche 1 bis 9, **dadurch gekennzeichnet, dass** eine am Ende des Zeitabschnitts wirksam werdende, eine Ruhigstellung des Massesystems (16, 40, 59) bewirkende Schwingungsabschaltung vorgesehen ist.

11. Kraftbegrenzungseinrichtung nach einem der Ansprüche 2 bis 4 für einen selbstsperrenden Gurtaufroller mit einer den Gurt haltenden, in einem Gehäuse gelagerten Gurtwelle, **dadurch gekennzeichnet, dass** das auf die Drehung der Gurtwelle in Abwickelrichtung ansprechende Massesystem aus einer Mehrzahl von über den Umfang der Gurtwelle verteilt angeordneten, um eine mittige gehäusefeste Lagerstelle (17) pendelnd gelagerten zweiarmigen Pendelmassen (16) besteht, die in den beiden Endstellungen ihrer Pendelbewegung mit einem an ihren beiden Enden angeordneten Zahn (19) in die Außenverzahnung (15) eines im Gefahrenfall an die Gurtwelle zu koppelnden und sich mit dieser drehenden Verzahnungsrings (13) eingreifen, derart, dass die Schwingung der jeweiligen Pendelmasse (16) bei der Drehung des Verzahnungsrings (13) gegenüber den Pendelmassen (16) durch das Abgleiten der Zahnflanken der an den Pendelmassen (16) ausgebildeten Zähne (19) an den Zahnflanken der Außenverzahnung (15) des Verzahnungsrings (13) erzeugt wird.

12. Kraftbegrenzungseinrichtung nach Anspruch 11, **dadurch gekennzeichnet, dass** in symmetrischer Anordnung zwei einander gegenüberliegende Pendelmassen (16) angeordnet sind.

13. Kraftbegrenzungseinrichtung nach Anspruch 11, **dadurch gekennzeichnet, dass** in symmetrischer Anordnung vier einander gegenüberliegende Pendelmassen (16) angeordnet sind.

14. Kraftbegrenzungseinrichtung nach Anspruch 11, **dadurch gekennzeichnet, dass** in symmetrischer Anordnung sechs einander gegenüberliegende Pendelmassen (16) angeordnet sind.

15. Kraftbegrenzungseinrichtung nach einem der Ansprüche 11 bis 14, **dadurch gekennzeichnet, dass** die Pendelmassen (16) derart ausgelegt sind, dass sich deren Bewegung gegenseitig ausgleicht.

16. Kraftbegrenzungseinricthung nach einem der Ansprüche 11 bis 15, **dadurch gekennzeichnet, dass** eine die Pendelmassen (16) auf deren äußeren Umfang umgreifende Ringfeder (20) mit an dieser ausgebildeten, jeweils die über den Zähnen (19) der Pendelmassen (16) liegenden Bereiche der Pendelmassen (16) beaufschlagenden Vorsprüngen vorgesehen ist.

17. Kraftbegrenzungseinrichtung nach einem der Ansprüche 11 bis 16, **dadurch gekennzeichnet, dass** die Pendelmassen (16) in ihrer Anordnung den Verzahnungsring (13) vollständig umgreifen und einander an ihren äußeren Enden überlappen.

18. Kraftbegrenzungseinricthung nach einem der Ansprüche 11 bis 17, **dadurch gekennzeichnet, dass** die Pendelmasse (16) an ihrem einen Ende mit einer zusätzlichen, die Schwingung den Pendelmasse (16) steuernden Feder (25) verbunden ist.

19. Kraftbegrenzungseinrichtung nach Anspruch 18, **dadurch gekennzeichnet, dass** die Feder (25) an ihrem anderen Ende ortsfest angeschlagen, ist.

20. Kraftbegrenzungseinrichtung nach Anspruch 19, **dadurch gekennzeichnet, dass** in die Feder (25) zwischen ihrer Einhängung an der Pendelmasse (16) und ihrer ortsfesten Befestigung eine zusätzliche Masse (32) eingeschaltet ist.

21. Kraftbegrenzungseinrichtung nach Anspruch 18, **dadurch gekennzeichnet, dass** die Feder (25) an ihrem anderen Ende an einem schwenkbar gelagerten zweiarmigen Hebel (27) angeschlagen ist, dessen anderer Arm (30) von einem mit dem Verzahnungsring (13) verbundenen Schaltnocken (31) bei Drehung des Verzahaungsringes (13) beaufschlagbar ist.

22. Kraftbegrenzungseinricthung nach Anspruch 18, **dadurch gekennzeichnet, dass** die Feder (25) mit ihrem anderen Ende an einem an der Pendelmasse (16) angebrachten Arm (33) angeschlagen ist und in die Feder (25) zwischen ihrer Einhängung an der Pendelmasse (16) und ihrer Einhängung an dem Arm (33) eine zusätzliche Trägheitsmasse (32) eingeschaltet ist.

23. Kraftbegrenzungseinrichtung nach einem der Ansprüche 11 bis 17, **dadurch gekennzeichnet, dass** die Pendelmasse (16) von einem ihre Schwingung bremsenden Bremselement (34, 35, 36) beaufschlagt ist.

24. Kraftbegrenzungseinrichtung nach Anspruch 23, **dadurch gekennzeichnet, dass** das Bremselement aus die Pendelmasse (16) seitlich beaufschlagenden Bremsbacken (34) besteht.

25. Kraftbegrenzungseinrichtung nach einem der Ansprüche 11 bis 17, **dadurch gekennzeichnet, dass** die Pendelmasse (16) von einem ihre Schwingung dämpfenden Dämpfungselement (35) beaufschlagt ist.

26. Kraftbegrenzungseinrichtung nach Anspruch 25, **dadurch gekennzeichnet, dass** das Dämpfungselement (35) aus einem hydraulisch arbeitenden Kolben-Zylinder-System besteht.

27. Kraftbegrenzungseinrichtung nach einem der Ansprüche 11 bis 17, **dadurch gekennzeichnet, dass** die Schwingung der Pendelmasse (16) mittels einer elektromechanisch arbeitenden Steuervorrichtung (36) steuerbar ist.

28. Kraftbegrenzungseinrichtung nach einem der Ansprüche 2 bis 4, für einen selbstsperrenden Gurtaufroller mit einer den Gurt haltenden, in einem Gehäuse gelagerten Gurtwelle, **dadurch gekennzeichnet, dass** das auf die Drehung der Gurtwelle (70) in Abwickelrichtung ansprechende Massesystem im Inneren der hohl ausgebildeten und einen Hohlraum (72) aufweisenden Gurtwelle (70) angeordnet ist.

29. Kraftbegrenzungseinrichtung nach Anspruch 28, **dadurch gekennzeichnet, dass** an der Gurtwelle (70) in deren Hohlraum (72) wenigstens eine pendelnd gelagerte zweiarmige Pendelmasse (16) mit jeweils einem an ihren äußeren Enden angeordneten Zahn (19) angeordnet ist, der in den beiden Endstellungen der Pendelbewegung der Pendelmasse (16) jeweils in die Außenverzahnung (15) eines sich "axial in den Hohlraum (72) der Gurtwelle (70) erstreckenden und drehfest mit einem Profilkopf (71) als Teil des gürtaufrollerseitigen Blokkiersystems verbundenen Stabelement (73) eingreift derart, dass die Schwingung der jeweiligen Pendelmasse (16) bei der Drehung der Gurtwelle (70) mit Pendelmasse (16) gegenüber dem Stabelement (73) durch das Abgleiten der Zahnflanken der an der Pendelmasse (16) ausgebildeten Zähne (19) an den Zahnflanken der Außenverzahnung (15) des Stabelementes (73) erzeugt wird.

30. Kraftbegrenzungseinrichtung nach einem der Ansprüche 2 bis 4 für einen selbstsperrenden Gurtaufroller mit einer den Gurt haltenden, in einem Gehäuse gelagerten Gurtwelle, **dadurch gekennzeichnet, dass** das Massesystem aus einer gehäusefest gelagerten Pendelmasse (40) mit einem in einer im Gefahrenfall umlaufenden Steuerkurve (47 eingreifenden und **dadurch** die Schwingung der Pendelmasse (40) steuernden Steuerstift (44) besteht und die Steuerkurve an einem im Gefahrenfall an die Gurtwelle zu koppelnden und sich mit dieser drehenden Steuerrad (45) ausgebildet ist derart, dass die Schwingung der Pendelmasse (40) bei der Drehung des Steuerrades (45) gegenüber dem Steuerstift (44) durch die Bewegungen des von Pendelmasse (40) getragenen Steuerstiftes (44) in der Steuerkurve (47) erzeugt wird.

31. Kraftbegrenzungseinrichtung nach Anspruch 30, **dadurch gekennzeichnet, dass** die Steuerkurve (47) einen gleichmäßigen Verlauf mit einer konstanten Schwingungsfrequenz der Pendelmasse (40) aufweist.

**32.** Kraftbegrenzungseinrichtung nach Anspruch 30, **dadurch gekennzeichnet, dass** die Steuerkurve (47) einen wechselnden Verlauf mit einer sich ändernden Schwingungsfrequenz der Pendelmasse (40) aufweiset.

**33.** Kraftbegrenzungseinrichtung nach einem der Ansprüche 30 bis 32, **dadurch gekennzeichnet, dass** die Steuerkurve (47) an ihrem Ende eine Stopausnehmung (51) für den Steuerstift (44) zum Festlegen der Pendelmasse (40) aufweist.

**34.** Kraftbegrenzungseinrichtung nach einem der Ansprüche 30 bis 32, **dadurch gekennzeichnet, dass** eine zusätzliche Masse (42) über ein Getriebe (43) an die Pendelmasse (40) gekoppelt ist.

**35.** Kraftbegrenzungseinrichtung nach Anspruch 1, **dadurch gekennzeichnet, dass** die sich relativ zueinander bewegenden Teile ein fest mit dem Kraftfahrzeug verbundenes Teil (55) und die im Crashfall linear bewegliche Lenksäule (56) als linear beweglicher Bestandteil des Kraftfahrzeuges sind.

**36.** Kraftbegrenzungseinrichtung nach Anspruch 1, **dadurch gekennzeichnet, dass** die sich relativ zueinander bewegenden Teile ein fest mit dem Kraftfahrzeug verbundenes Teil (55) und ein im Crashfall bewegliches Teil des Fahrzeugrahmens als linear beweglicher Bestandteil des Kraftfahrzeuges sind.

**37.** Kraftbegrenzungseinrichtung nach Anspruch 1, **dadurch gekennzeichnet, dass** die sich relativ zueinander bewegenden Teile ein fest mit dem Kraftfahrzeug verbundenes Teil und ein im Crashfall beweglicher Karosserieteil als linear bewegliches Bestandteil des Kraftfahrzeuges sind.

**38.** Kraftbegrenzungseinrichtung nach Anspruch 1, **dadurch gekennzeichnet, dass** die sich relativ zueinander bewegenden Teile Bestandteile eines linear arbeitenden Fahrzeugsicherheitssystems mit einem gegenüber einem fahrzeugfest angeordneten Bestandteil (55) linear beweglichen, den Gurt haltenden Beschlagteil sind, dessen Bewegung einen begrenzten Auslass des Gurtes ermöglicht.

**39.** Kraftbegrenzungseinrichtung nach einem der Ansprüche 35 bis 38, **dadurch gekennzeichnet, dass** das fahrzeugfest angeordnete Bestandteil (55) zylinderförmig ausgebildet ist und der relativ dazu bewegliche Bestandteil ein in dem Zylinder bewegliches Rohr (56) aufweist, wobei der Zylinder (55) an seiner Innenwandung mit einer Verzahnung (62) versehen ist und in dem Rohr (56) wenigstens eine in dem Rohr pendelnd bis zum jeweiligen Anschlag an der Zylinderwandung gelagerte Pendelmasse (59) angeordnet ist, die mit einander gegenüberliegend ausgebildeten Zähnen (61) in ihren beiden Endstellungen jeweils in Eingriff mit der Verzahnung (62) des Zylinders (55) kommt derart, dass die Schwingung der Pendelmasse (59) bei der Längsbewegung des Rohres (56) gegenüber der Zylinderwandung durch das Abgleiten der Zahnflanken der an der Pendelmasse (59) ausgebildeten Zähne (61) an den Zahnflanken der Verzahnung (62) des Zylinders (55) erzeugt wird derart, dass die Bewegung des Rohres (56) mit einer durch die Frequenz der Pendelbewegung definierten Vorschubgeschwindigkeit gesteuert ist.

**40.** Kraftbegrenzungseinrichtung nach Anspruch 39, **dadurch gekennzeichnet, dass** in dem Rohr (56) eine Mehrzahl von Pendelmassen (59) mit jeweils einander gegenläufigen Pendelbewegungen angeordnet ist.

**41.** Kraftbegrenzungseinrichtung nach Anspruch 39 oder 40, **dadurch gekennzeichnet, dass** das Rohr (56) in dem Zylinder (55) durch eine Feder (63) in seine Ausgangsstellung vorgespannt ist.

**Claims**

**1.** Force limiting device for use in a motor vehicle, which is designed for adjusting the attenuation of a force occurring in a dangerous situation in the motor vehicle between two parts moving relative to one another, **characterized in that** the force limiting device is formed by a mass system (16, 40, 59), which is placed into oscillation at a predefined frequency in the event of danger and which controls the motion of at least one moving part (12, 13, 56) in relation to the other part with a speed depending on its oscillation frequency.

**2.** Force limiting device according to claim 1, **characterized in that** the parts moving relative to one another are components of vehicle safety system, comprising a frame (11) fixed to the vehicle and a belt shaft rotatable relative to the frame (11) and carrying in a belt strap holding a seat-belted occupant, wherein in the event of a crash the mass system (16, 40) placed into oscillation controls a limited discharge of the belt at a discharge rate defined by the frequency of the mass system (16, 40) placed into oscillation.

**3.** Force limiting device according to claim 2, **characterized in that** the belt strap withdrawal occurring in the event of danger provides the excitation of the mass system (16, 40) so that it achieves its oscillation frequency, and the belt discharge is determined as a function of the time period of the acting belt withdrawal force.

**4.** Force limiting device according to claim 3, **characterized in that** the belt discharge is convertible into the oscillatory excitation of the mass system by mechanically interacting components (12, 13).

**5.** Force limiting device according to claim 1 or 2, **characterized in that** an external drive provides the excitation of the mass system (16, 40) so that it achieves its oscillation frequency and that the drive is triggered in the event of danger and acts for a predefined time period.

**6.** Force limiting device according to claim 5, **characterized in that** the external drive is configured as a prestressed spring/mass system.

**7.** Force limiting device according to one of the claims 1 to 6, **characterized in that** a constant oscillation frequency of the mass system (16, 40, 59) is set over the time period.

**8.** Force limiting device according to one of the claims 1 to 6, **characterized in that** a degressive oscillation frequency of the mass system (16, 40, 59) is set over the time period.

**9.** Force limiting device according to one of the claims 1 to 6, **characterized in that** a progressive oscillation frequency of the mass system (16, 40, 59) is set over the time period.

**10.** Force limiting device according to one of the claims 1 to 9, **characterized in that** an oscillation cutoff, which takes effect at the end of the time period and acts to immobilize the mass system (16, 40, 59), is provided.

**11.** Force limiting device according to one of the claims 2 to 4 for a self-locking belt retractor comprising a belt shaft which is mounted in a housing and holds the belt, **characterized in that** the mass system responding to the rotation of the belt shaft in the unwinding direction consists of a plurality of two-armed pendulum masses (16) which are distributed over the periphery of the belt shaft and which are mounted in a manner that enables them to swing around a center bearing point (17) fixed to the housing and which, in both final positions of their swinging movement, use a tooth (19) located at both ends to engage the external toothing (15) of a toothed ring (13), which in the event of danger is to be coupled to the belt shaft and rotate therewith, this engagement occurring in such manner that, when the toothed ring (13) rotates relative to the pendulum masses (16), the sliding of the tooth flanks of the teeth (19) configured on the pendulum masses (16) on the tooth flanks of the external toothing (15) of the toothed ring (13) generates the oscillation of the respective pendulum mass (16).

**12.** Force limiting device according to claim 11, **characterized in that** two pendulum masses (16) are arranged opposite one another in symmetrical arrangement.

**13.** Force limiting device according to claim 11, **characterized in that** four pendulum masses (16) are arranged opposite one another in symmetrical arrangement.

**14.** Force limiting device according to claim 11, **characterized in that** six pendulum masses (16) are arranged opposite one another in symmetrical arrangement.

**15.** Force limiting device according to one of the claims 11 to 14, **characterized in that** the pendulum masses (16) are arranged and configured in such a manner that their movements mutually compensate each other.

**16.** Force limiting device according to one of the claims claim 11 to 15, **characterized in that** an annular spring (20) engaging the outside periphery of the pendulum masses (16) is provided with projections, which are configured on the annular spring (20) and impinge those regions of the pendulum masses (16) located above the teeth (19) of the pendulum masses (16).

**17.** Force limiting device according to one of the claims claim 11 to 16, **characterized in that** the pendulum masses (16) are arranged to engage the toothed ring (13) completely and to overlap one another on their outer ends.

**18.** Force limiting device according to one of the claims claim 11 to 17, **characterized in that** one end of the pendulum mass (16) is connected to an additional spring (25) controlling the oscillation of the pendulum mass (16).

**19.** Force limiting device according to claim 18, **characterized in that** the spring (25) is fixed stationary on its other end.

**20.** Force limiting device according to claim 19, **characterized in that** an additional mass (32) is interposed in the spring (25) between its hanging system on the pendulum mass (16) and its stationary fastening.

**21.** Force limiting device according to claim 18, **characterized in that** the other end of the spring (25) is fixed to a two-armed, swivel-mounted lever (27), the other arm (30) of which can be impinged by a switching cam (31) connected to the toothed ring (13) when the toothed ring (13) rotates.

22. Force limiting device according to claim 18, **characterized in that** the other end of the spring (25) is fixed to an arm (33) attached to the pendulum mass (16) and that an additional inertial mass (32) is interposed in the spring (25) between its hanging system on the pendulum mass (16) and its hanging system on the arm (33).

23. Force limiting device according to one of the claims 11 to 17, **characterized in that** the pendulum mass (16) is impinged by a brake element (34, 35, 36) that slows down its oscillation.

24. Force limiting device according to claim 23, **characterized in that** the brake element consists of brake shoes (34) laterally impinging the pendulum mass (16).

25. Force limiting device according to one of the claims 11 to 17, **characterized in that** the pendulum mass (16) is impinged by an attenuation element (35) attenuating the oscillation of the pendulum mass (16).

26. Force limiting device according to claim 25, **characterized in that** the attenuation element (35) consists of a hydraulically operating piston/cylinder system.

27. Force limiting device according to one of the claims 11 to 17, **characterized in that** the oscillation of the pendulum mass (16) can be controlled by a control device that operates electromechanically.

28. Force limiting device according to one of the claims 2 to 4, for a self-locking belt retractor comprising a belt shaft that is mounted in a housing and holds the belt, **characterized in that** the mass system responding to the rotation of the belt shaft (70) in the unwinding direction is configured in the interior of the belt shaft (70), which is hollowly configured and includes a hollow space (72).

29. Force limiting device according claim 28, **characterized in that** at least one swing-mounted, two-armed pendulum mass (16), which has one tooth (19) arranged on each of its outer ends, is arranged in the hollow space (72) on the belt shaft (70), said tooth, in the two final positions of the swinging movement of the pendulum mass (16), engaging the external toothing (15) of a bar element (73), which extends axially into the hollow space (72) of the belt shaft (70) and is connected in nonrotatable fashion to a profile head (71) as part of the locking system on the belt retractor side, said engagement taking place in such a manner that the sliding of the tooth flanks of the teeth (19) configured on the pendulum mass (16) on the tooth flanks of the external toothing (15) of the bar element (73) generates the oscillation of the respective pendulum mass (16) when the belt shaft (70) comprising the pendulum mass (16) rotates relative to the bar element (73).

30. Force limiting device according to one of the claims 2 to 4, for a self-locking belt retractor comprising a belt shaft that is mounted in a housing and holds the belt, **characterized in that** the mass system consists of a pendulum mass (40), which is mounted fixed to the housing and has a control pin (44), said control pin engaging a continuous control curve (47) in the event of danger and thereby controlling the oscillation of the pendulum mass (40), and that the control curve is configured on a control wheel (45) which, in the event of danger, is to be coupled to the belt shaft and rotates therewith, the configuration being in such a manner that the movement of the control pin (44) in the control curve (47) generates the oscillation of the pendulum mass (40) when the control wheel (45) rotates relative to the control pin (44), the control pin being carried by the pendulum mass (40).

31. Force limiting device according claim 30, **characterized in that** the control curve (47) includes a uniform course with a constant oscillation frequency of the pendulum mass (40).

32. Force limiting device according claim 30, **characterized in that** the control curve (47) includes an alternating course with a changing oscillation frequency of the pendulum mass (40).

33. Force limiting device according one of the claims 30 to 32, **characterized in that** the end of the control curve (47) includes a stop recess (51) for the control pin (44) to fix the pendulum mass (40).

34. Force limiting device according one of the claims 30 to 32, **characterized in that** an additional mass (42) is coupled to the pendulum mass (40) by a gearing (43).

35. Force limiting device according claim 1, **characterized in that** the parts moving relative to one another are consisting of a part (55) tightly connected to the motor vehicle and, as the linearly moving component of the motor vehicle, of the steering column (56) being movable linearly in the event of a crash.

36. Force limiting device according claim 1, **characterized in that** the parts moving relative to one another are consisting of a part tightly connected to the motor vehicle (55) and, as the linearly moving component of the motor vehicle, of a part of the vehicle frame being movable in the event of a crash.

37. Force limiting device according claim 1, **character-**

**ized in that** the parts moving relative to one another are consisting of a part tightly connected to the motor vehicle and, as the linearly moving component of the motor vehicle, of a part of the vehicle's structure being movable in the event of a crash.

38. Force limiting device according claim 1, **characterized in that** the parts moving relative to one another are components of a linearly operating vehicle safety system comprising a fitting piece, which holds the belt and moves linearly relative to a component (55) fixed to the vehicle and the motion of which enables a limited discharge of the belt strap.

39. Force limiting device according to one of the claims 35 to 38, **characterized in that** the component (55) that is fixed to the vehicle is configured cylindrical and that the component moving relative thereto includes a tube (56) that can move in the cylinder, wherein the inside wall of the cylinder (55) is provided with a toothing (62) and at least one pendulum mass (59), which is mounted so that it can swing in the tube (56) up to the limit stop on the cylinder wall, is arranged in the tube and, with teeth (61) that are configured opposite one another, engages the toothing (62) of the cylinder (55) on its two final positions in such a manner that, when the tube (56) moves longitudinally relative to the cylinder wall, the sliding of the tooth flanks of the teeth (61) configured on the pendulum mass (59) on the tooth flanks of the inner toothing (62) of the cylinder (55) generates the oscillation of the pendulum mass (59) in such a manner that the motion of the tube (56) is controlled with a feed rate defined by the frequency of the swinging movement.

40. Force limiting device according to claim 39, **characterized in that** a plurality of pendulum masses (59) is arranged within the tube (56) with swinging movements rotating opposite to one another.

41. Force limiting device according to claim 39 or 40, **characterized in that** the tube (56) in the cylinder (55) is prestressed by a spring (63) into its starting position.

**Revendications**

1. Dispositif de limitation de force à utiliser sur un véhicule automobile, qui est aménagé pour régler l'amortissement d'une force apparaissant dans une situation dangereuse dans le véhicule entre deux parties se déplaçant l'une par rapport à l'autre, **caractérisé en ce que** le dispositif de limitation de force est formé par un système de masse (16, 40, 59) mis en vibration en cas de danger avec une fréquence prédéfinie, lequel système commande le mouvement d'au moins une partie (12, 13, 56) se déplaçant par rapport à l'autre partie avec une vitesse définie en fonction de sa fréquence de vibration.

2. Dispositif de limitation de force selon la revendication 1, **caractérisé en ce que** les parties se déplaçant l'une par rapport à l'autre sont des composants d'un système de sécurité du véhicule, qui comprend un châssis (11) solidaire du véhicule et une bobine de ceinture (12) tournant par rapport au châssis (11) comme support d'une ceinture maintenant le passager du véhicule attaché, le système de masse (16, 40) mis en vibration commandant dans le cas d'une collision une sortie limitée de la ceinture par une rotation commandée de l'arbre de ceinture (12) avec une vitesse de sortie définie par la fréquence du système de masse (16, 40) mis en vibration.

3. Dispositif de limitation de force selon la revendication 2, **caractérisé en ce que** l'excitation du système de masse (16, 40) pour obtenir sa fréquence de vibration s'effectue par l'extraction de sangle survenant en cas de danger et la sortie de la ceinture est déterminée en fonction de la durée de la force d'extraction de sangle agissante.

4. Dispositif de limitation de force selon la revendication 3, **caractérisé en ce que** l'extraction de la sangle peut être convertie par des composants (12, 13) coopérant mécaniquement dans l'excitation de vibration du système de masse.

5. Dispositif de limitation de force selon la revendication 1 ou 2, **caractérisé en ce que** l'excitation du système de masse (16, 40) intervient pour obtenir sa fréquence de vibration par un entraînement extérieur pouvant être déclenché en cas de danger et efficace pendant une durée prédéfinie.

6. Dispositif de limitation de force selon la revendication 5, **caractérisé en ce que** l'entraînement extérieur est conçu sous forme de système de masse de ressort pré-tendu.

7. Dispositif de limitation de force selon l'une quelconque des revendications 1 à 6, **caractérisé en ce qu'**une fréquence de vibration, constante pendant la période, du système de masse (16, 40, 59) est réglée.

8. Dispositif de limitation de force selon l'une quelconque des revendications 1 à 6, **caractérisé en ce qu'**une fréquence de vibration, dégressive au cours de la période, du système de masse (16, 40, 59) est réglée.

9. Dispositif de limitation de force selon l'une quelconque des revendications 1 à 6, **caractérisé en ce**

**qu'**une fréquence de vibration, progressive pendant la période, du système de masse (16, 40, 59) est réglée.

10. Dispositif de limitation de force selon l'une quelconque des revendications 1 à 9, **caractérisé en ce qu'**une déconnexion de vibration devenant efficace à la fin de la période et entraînant une immobilisation du système de base (16, 40, 59) est prévue.

11. Dispositif de limitation de force selon l'une quelconque des revendications 2 à 4 pour un enrouleur de ceinture autobloquant comprenant un arbre de ceinture, maintenant la ceinture et logé dans un boîtier, **caractérisé en ce que** le système de masse réagissant à la rotation de l'arbre de ceinture dans le sens de déroulement est constitué d'une pluralité de masses pendulaires (16) à deux bras, réparties sur le pourtour de l'arbre de ceinture, logées de façon pendulaire autour d'un point de palier (17) centré et solidaire du boîtier, lesquelles masses s'engagent, dans les deux positions finales de leur mouvement pendulaire, avec une dent (19) disposée sur leurs deux extrémités dans la denture extérieure (15) d'une bague de denture (13) à coupler en cas de danger à l'arbre de ceinture et tournant avec celui-ci, de telle sorte que la vibration de la masse pendulaire (16) respective est générée lors de la rotation de la bague de denture (13) par rapport aux masses pendulaires (16) par le glissement des flancs de dent des dents (19) formées sur les masses pendulaires (16) sur les flancs de dent de la denture extérieure (15) de la bague de denture (13).

12. Dispositif de limitation de force selon la revendication 11, **caractérisé en ce que** deux masses pendulaires (16) se faisant face sont disposées dans un agencement symétrique.

13. Dispositif de limitation de force selon la revendication 11, **caractérisé en ce que** quatre masses pendulaires (16) se faisant face sont disposées dans un agencement symétrique.

14. Dispositif de limitation de force selon la revendication 11, **caractérisé en ce que** six masses pendulaires (16) se faisant face sont disposées dans un agencement symétrique.

15. Dispositif de limitation de force selon l'une quelconque des revendications 11 à 14, **caractérisé en ce que** les masses pendulaires (16) sont conçues de telle sorte que leur mouvement s'équilibre réciproquement.

16. Dispositif de limitation de force selon l'une quelconque des revendications 11 à 15, **caractérisé en ce qu'**un ressort-bague (20) entourant les masses pendulaires (16) sur leur pourtour extérieur est prévu avec des parties saillantes formées sur ce ressort, sollicitant respectivement les zones des masses pendulaires (16) qui sont disposées au-dessus des dents (19) des masses pendulaires (16).

17. Dispositif de limitation de force selon l'une quelconque des revendications 11 à 16, **caractérisé en ce que** les masses pendulaires (16) enveloppent complètement la bague de denture (13) dans leur agencement et se chevauchent sur leurs extrémités extérieures.

18. Dispositif de limitation de force selon l'une quelconque des revendications 11 à 17, **caractérisé en ce que** la masse pendulaire (16) est reliée par l'une de ses extrémités à un ressort (25) supplémentaire commandant la vibration de la masse pendulaire (16).

19. Dispositif de limitation de force selon la revendication 18, **caractérisé en ce que** le ressort (25) est accroché de façon fixe sur son autre extrémité.

20. Dispositif de limitation de force selon la revendication 19, **caractérisé en ce qu'**une masse (32) supplémentaire est engagée dans le ressort (25) entre son accrochage sur la masse pendulaire (16) et sa fixation fixe.

21. Dispositif de limitation de force selon la revendication 18, **caractérisé en ce que** le ressort (25) est accroché par son extrémité sur un levier (27) à deux bras, logé de façon pivotante, dont l'autre bras (30) peut être sollicité par une came de commutation (31) reliée à la bague de denture (13) en cas de rotation de la bague de denture (13).

22. Dispositif de limitation de force selon la revendication 18, **caractérisé en ce que** le ressort (25) est accroché par son autre extrémité sur un bras (33) placé sur la masse pendulaire (16) et une masse d'inertie (32) supplémentaire est engagée dans le ressort (25) entre son accrochage sur la masse pendulaire (16) et son accrochage sur le bras (33).

23. Dispositif de limitation de force selon l'une quelconque des revendications 11 à 17, **caractérisé en ce que** la masse pendulaire (16) est sollicitée par un élément de frein (34, 35, 36) freinant sa vibration.

24. Dispositif de limitation de force selon la revendication 23, **caractérisé en ce que** l'élément de freinage est constitué de mâchoires de frein (34) sollicitant la masse pendulaire (16) par le côté.

25. Dispositif de limitation de force selon l'une quelconque des revendications 11 à 17, **caractérisé en ce**

**que** la masse pendulaire (16) est sollicitée par un élément d'amortissement (35) amortissant sa vibration.

26. Dispositif de limitation de force selon la revendication 25, **caractérisé en ce que** l'élément d'amortissement (35) est constitué d'un système piston-cylindre travaillant de façon hydraulique.

27. Dispositif de limitation de force selon l'une quelconque des revendications 11 à 17, **caractérisé en ce que** la vibration de la masse pendulaire (16) peut être commandée au moyen d'un dispositif de commande (36) travaillant de façon électromécanique.

28. Dispositif de limitation de force selon l'une quelconque des revendications 2 à 4, destiné à un enrouleur de ceinture autobloquant avec un arbre de ceinture maintenant la ceinture et logé dans un boîtier, **caractérisé en ce que** le système de masse réagissant à la rotation de l'arbre de ceinture (70) dans le sens de déroulement est disposé à l'intérieur de l'arbre de ceinture (70) conçu creux et présentant une cavité (72).

29. Dispositif de limitation de force selon la revendication 28, **caractérisé en ce qu'**au moins une masse pendulaire (16) à deux bras, logée de façon oscillante, est disposée sur l'arbre de ceinture (70) dans sa cavité (72) avec respectivement une dent (19) disposée sur ses extrémités extérieures, laquelle s'engage à chaque fois, dans les deux positions extrêmes du mouvement pendulaire de la masse pendulaire (16), dans la denture extérieure (15) d'un élément de barre (73) s'étendant axialement dans la cavité (72) de l'arbre de ceinture (70) et relié de façon solidaire en rotation à une tête profilée (71) comme partie du système de blocage côté enrouleur de ceinture, de telle sorte que la vibration de la masse pendulaire (16) respective est générée lors de la rotation de l'arbre de ceinture (70) avec masse pendulaire (16) par rapport à l'élément de barre (73) par le glissement des flancs de dent des dents (19) formées sur la masse pendulaire (16) sur les flancs de dent de la denture extérieure (15) de l'élément de barre (73).

30. Dispositif de limitation de force selon l'une quelconque des revendications 2 à 4 pour un enrouleur de ceinture autobloquant avec un arbre de ceinture maintenant la ceinture et logé dans un boîtier, **caractérisé en ce que** le système de masse comprend une masse pendulaire (40) logée de façon solidaire du boîtier avec une broche de commande (44) s'engageant dans une came de commande (47) tournant en cas de danger et commandant ainsi la vibration de la masse pendulaire (40) et la came de commande est conçue sur une roue de commande (45) couplée en cas de danger à l'arbre de ceinture et tournant avec celui-ci, de telle sorte que la vibration de la masse pendulaire (40) est générée lors de la rotation de la roue de commande (45) par rapport à la broche de commande (44) par les mouvements de la broche de commande (44) portée par la masse pendulaire (40) dans la came de commande (47).

31. Dispositif de limitation de force selon la revendication 30, **caractérisé en ce que** la came de commande (47) présente une courbe uniforme avec une fréquence de vibration constante de la masse pendulaire (40).

32. Dispositif de limitation de force selon la revendication 30, **caractérisé en ce que** la came de commande (47) présente une courbe variable avec une fréquence de vibration qui se modifie de la masse pendulaire (40).

33. Dispositif de limitation de force selon l'une quelconque des revendications 30 à 32, **caractérisé en ce que** la came de commande (47) présente sur son extrémité un évidement d'arrêt (51) pour la broche de commande (44) pour la fixation de la masse pendulaire (40).

34. Dispositif de limitation de force selon l'une quelconque des revendications 30 à 32, **caractérisé en ce qu'**une masse (42) supplémentaire est couplée au moyen d'un engrenage (43) à la masse pendulaire (40).

35. Dispositif de limitation de force selon la revendication 1, **caractérisé en ce que** les parties se déplaçant l'une par rapport à l'autre sont une partie (55) reliée fixement au véhicule et la colonne de direction (56) mobile linéairement en cas de collision en tant que composant mobile linéairement du véhicule.

36. Dispositif de limitation de force selon la revendication 1, **caractérisé en ce que** les parties se déplaçant l'une par rapport à l'autre sont une partie (55) reliée fixement au véhicule et une partie amovible en cas de collision du châssis de véhicule en tant que composant mobile linéairement du véhicule.

37. Dispositif de limitation de force selon la revendication 1, **caractérisé en ce que** les parties se déplaçant l'une par rapport à l'autre sont une partie reliée fixement au véhicule et une partie de carrosserie mobile en cas de collision en tant que composant mobile linéairement du véhicule.

38. Dispositif de limitation de force selon la revendication 1, **caractérisé en ce que** les parties se déplaçant l'une par rapport à l'autre sont des composants d'un système de sécurité de véhicule travaillant de façon linéaire avec une ferrure mobile linéairement par rapport à un composant (55) disposé de façon fixe sur le véhicule et maintenant la ceinture, dont le déplacement permet une sortie limitée de la ceinture.

**39.** Dispositif de limitation de force selon l'une quelconque des revendications 35 à 38, **caractérisé en ce que** le composant (55) disposé de façon fixe sur le véhicule est conçu avec une forme cylindrique et le composant mobile par rapport au premier présente un tuyau (56) mobile dans le cylindre, le cylindre (55) étant doté d'une denture (62) sur sa paroi intérieure et au moins une masse pendulaire (59) logée dans le tuyau de façon oscillante jusqu'à la butée respective sur la paroi de cylindre étant disposée dans le tuyau (56), laquelle masse vient avec des dents (61) conçues les unes en face des autres, dans leurs deux positions extrêmes, respectivement en prise avec la denture (62) du cylindre (55), de telle sorte que la vibration de la masse pendulaire (59) est générée lors du déplacement longitudinal du tuyau (56) par rapport à la paroi de cylindre par le glissement des flancs de dent des dents (61) conçues sur la masse pendulaire (59) sur les flancs de dents de la denture (62) du cylindre (55), de telle sorte que le déplacement du tuyau (56) est commandé avec une vitesse d'agencement définie par la fréquence du mouvement pendulaire.

**40.** Dispositif de limitation de force selon la revendication 39, **caractérisé en ce qu'**une pluralité de masses pendulaires (59) avec des mouvements pendulaires contraires les uns par rapport aux autres est disposée dans le tuyau (56).

**41.** Dispositif de limitation de force selon la revendication 39 ou 40, **caractérisé en ce que** le tuyau (56) est pré-tendu dans le cylindre (55) par un ressort (63) dans sa position de départ.

Fig. 1

Fig. 2

Fig. 3

Fig. 4

Fig.5

Fig.6

Fig. 7

Fig. 8

Fig. 9

Fig. 10

Fig. 11

Fig. 12

Fig. 13

Fig. 14

Fig. 15

Fig. 16

Fig. 17

**EP 1 874 593 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1222097 B1